# EUROPEAN PATENT APPLICATION

(11) **EP 4 760 979 A1**
(43) Date of publication of application: **17.06.2026**
(21) Application number: 24865728.0
(22) Date of filing: 28.08.2024
(51) Int. Cl.: H01Q 1/24, H04M 1/02, H01Q 9/04, H01Q 5/307, C09D 5/00

(54) **ELECTRONIC DEVICE COMPRISING ANTENNA**

(30) Priority: 14.09.2023 KR 20230122608; 31.10.2023 KR 20230147963
(71) Applicant: Samsung Electronics Co., Ltd., Suwon-si, Gyeonggi-do 16677 (KR)
(72) Inventor: YU, Changha, Suwon-si, Gyeonggi-do 16677 (KR); SEO, Mincheol, Suwon-si, Gyeonggi-do 16677 (KR); CHUN, Jaebong, Suwon-si, Gyeonggi-do 16677 (KR); KANG, Woosuk, Suwon-si, Gyeonggi-do 16677 (KR); KWON, Ohheon, Suwon-si, Gyeonggi-do 16677 (KR); PARK, Gyubok, Suwon-si, Gyeonggi-do 16677 (KR); YUN, Sumin, Suwon-si, Gyeonggi-do 16677 (KR); LEE, Sangmok, Suwon-si, Gyeonggi-do 16677 (KR)
(74) Representative: HGF
(86) International application number: PCT/KR2024/012857
(87) International publication number: WO 2025/058287

(57) **Abstract**

According to various embodiments, an electronic device may include: a first housing formed of a conductive material; a second housing slidably coupled to the first housing, including at least one first conductive portion, and formed of a conductive material; a communication circuit disposed in an inner space of the electronic device and configured to transmit and/or receive wireless signals in a first frequency band through the at least one first conductive portion; and at least one dielectric disposed between the first housing and the second housing, wherein in a slide-out state, the electronic device includes an overlapping area where the first housing and the second housing at least partially overlap each other, and the at least one dielectric may be disposed in the overlapping area.

## Description

### [Technical Field]

The embodiments of the present disclosure relate to an electronic device comprising an antenna.

### [Background Art]

The electronic device is gradually becoming slimmer, and is being developed to have increased rigidity and enhanced design aspects, while differentiating its functional elements. The electronic device is departing from a uniform rectangular shape and is gradually being transformed into various shapes. The electronic device may have a transformable structure capable of using a large-screen display while being convenient to carry. The electronic device may have a structure (e.g., a rollable structure or a slidable structure) capable of varying a display surface area of a flexible display (e.g., a rollable display) through support of housings operating in a sliding manner with respect to each other. Such an electronic device may include at least one antenna (e.g., an antenna module or an antenna structure).

The information described above may be provided as the related art for the purpose of enhancing the understanding of the present disclosure. No assertion or determination is made with respect to the applicability of any of the above-mentioned as the prior art related to the present disclosure.

### [Disclosure of Invention]

### [Technical Problem]

An electronic device may include a rollable electronic device (e.g., a slidable electronic device) capable of inducing expansion and/or reduction of a display surface area of a flexible display (e.g., a rollable display, an expandable display, or a stretchable display) according to an operating state. The rollable electronic device may include a first housing (e.g., a book cover or a first housing structure) and a second housing (e.g., a front cover or a second housing structure) movably coupled with respect to each other. For example, the first housing and the second housing operate to be slidable with respect to each other, and may support at least a portion of the flexible display. The flexible display may be induced to have a first display surface area in a slide-in state, and may be induced to have a second display surface area that is larger than the first display surface area in a slide-out state.

The rollable electronic device may include an antenna configured to transmit and/or receive a wireless signal in a designated frequency band through at least one conductive portion disposed on at least a portion of a side surface (e.g., a lateral member) of the first housing and/or the second housing formed of a conductive material. Since the antenna is coupled through a relatively wide overlapping area of the two housings in the slide-in state, excellent radiation performance may be manifested under a stable ground condition.

However, in the slide-out state, as the overlapping area of the first housing and the second housing relatively decreases or is spaced apart, a coupling area decreases and is changed to an unstable ground condition, whereby a parasitic resonance frequency may be generated in an operating frequency band, and such a parasitic resonance frequency may deteriorate the radiation performance of the antenna.

In order to improve such a problem, as an electrical connection member, a conductive contact such as a C-clip may be disposed between the side surface of the first housing and the side surface of the second housing.

However, the conductive contact may increase a volume of the electronic device, and since the first housing and the second housing are brought into point contact, difficulty may occur in resistance management, driving loss may occur due to an increase in frictional force between the two housings, and noise may be generated during operation.

### [Solution to Problem]

Various embodiments of the present disclosure may provide an electronic device comprising an antenna in which excellent radiation performance can be maintained even in a slide-out state.

Various embodiments may provide an electronic device comprising an antenna in which improved radiation performance can be manifested by inducing stable coupling between two housings in a slide-out state.

Various embodiments may provide an electronic device comprising an antenna capable of helping to improve radiation performance and slim down the electronic device through a minimum arrangement design.

Various embodiments may provide an electronic device comprising an antenna in which improved radiation performance can be manifested through removal of a parasitic resonance frequency in an operating frequency band.

However, the objects to be achieved by the present disclosure is not limited to the above-mentioned objects but may be variously expanded without departing from the technical teachings and scope of the present disclosure.

According to various embodiments, an electronic device may comprise: a first housing formed of a conductive material; a second housing slidably coupled to the first housing, including at least one first conductive portion, and formed of a conductive material; a communication circuit disposed in an inner space of the electronic device and configured to transmit and/or receive a wireless signal in a first frequency band through the at least one first conductive portion; and at least one dielectric disposed between the first housing and the second housing, wherein, in a slide-out state, the electronic device may comprise an overlapping area in which the first housing and the second housing at least partially overlap each other, and the at least one dielectric may be disposed in the overlapping area.

### [Advantageous Effects of Invention]

An electronic device according to exemplary embodiments of the present disclosure includes a dielectric in a sheet form disposed in an overlapping area between a first housing and a second housing and bringing the two housings into surface contact in a slide-out state, thereby securing a stable ground condition, which can help to manifest stable radiation performance of an antenna and slim down the electronic device not only in a slide-in state but also in the slide-out state.

In addition, various effects that can be directly or indirectly identified through the present document may be provided.

The effects obtained by the present disclosure are not limited to the aforementioned effects, and other effects, which are not mentioned above, will be clearly understood by those skilled in the art to which the present disclosure pertains from the following description.

### [Brief Description of Drawings]

In connection with the description of the drawings, the same or similar reference numerals may be used for the same or similar constituent elements.
FIG. 1 is a block diagram of an electronic device within a network environment according to various embodiments of the present disclosure.
FIG. 2A and FIG. 2B are views illustrating a front surface and a rear surface of the electronic device in a slide-in state according to various embodiments of the present disclosure.
FIG. 3A and FIG. 3B are views illustrating a front surface and a rear surface of the electronic device in a slide-out state according to various embodiments of the present disclosure.
FIG. 4 is an exploded perspective view of the electronic device according to various embodiments of the present disclosure.
FIG. 5A is a cross-sectional view of the electronic device taken along line 5a-5a of FIG. 2A according to various embodiments of the present disclosure.
FIG. 5B is a cross-sectional view of the electronic device taken along line 5b-5b of FIG. 3A according to various embodiments of the present disclosure.
FIG. 6A is a configuration view of a second housing according to various embodiments of the present disclosure.
FIG. 6B is a view illustrating a state in which a dielectric is disposed in the second housing according to various embodiments of the present disclosure.
FIG. 7A and FIG. 7B are views illustrating a rear surface and a front surface of the electronic device including a dielectric in a slide-out state according to various embodiments of the present disclosure.
FIG. 7C is a partial cross-sectional view of the electronic device taken along line 7c-7c of FIG. 7A according to various embodiments of the present disclosure.
FIG. 7D and FIG. 7E are modified embodiments of FIG. 7C according to various embodiments of the present disclosure.
FIG. 8A and FIG. 8B are views comparing changes in current distribution of the electronic device according to whether or not a dielectric is present in a slide-out state according to various embodiments of the present disclosure.
FIG. 9A is a view of a comparative example illustrating a current distribution of the electronic device when no dielectric is present in a slide-out state.
FIG. 9B is a view of a comparative example illustrating a current distribution of the electronic device when a conductive contact of a point contact type is disposed in a slide-out state.
FIG. 9C is a view illustrating a current distribution of the electronic device when a dielectric is disposed in a slide-out state according to various embodiments of the present disclosure.
FIG. 10 is a graph comparing radiation performance of an antenna according to whether or not a dielectric is present in a slide-out state according to various embodiments of the present disclosure.
FIG. 11 is a graph comparing radiation performance of an antenna according to whether or not a dielectric is present and a change in an overlapping area of two housings in a slide-out state according to various embodiments of the present disclosure.
FIG. 12 is a graph comparing radiation performance of an antenna according to a change in a surface area of a dielectric in a slide-out state according to various embodiments of the present disclosure.
FIG. 13 is a graph comparing radiation performance of an antenna according to a change in permittivity of a dielectric in a slide-out state according to various embodiments of the present disclosure.
FIG. 14 is a graph comparing radiation performance of another antenna according to whether or not a dielectric is present in a slide-out state according to various embodiments of the present disclosure.
FIG. 15A and FIG. 15B are views of the electronic device illustrating an arrangement structure of a dielectric in a slide-out state according to various embodiments of the present disclosure.
FIG. 16A is a plan view and a side view of the electronic device illustrating a state in which dielectrics are disposed on a side surface according to various embodiments of the present disclosure.
FIG. 16B is a perspective view of a first housing in which the dielectrics of FIG. 16A are disposed according to various embodiments of the present disclosure.
FIG. 16C is a perspective view of a first housing illustrating a modified embodiment of FIG. 16B according to various embodiments of the present disclosure.

### [Mode for Disclosure]

Hereinafter, embodiments of the disclosure will be described in detail with reference to the accompanying drawings such that those ordinarily skilled in the art to which the disclosure pertains can easily practice them. However, the disclosure may be implemented in many different forms without being limited to those embodiments described herein. In relation to the description of the drawings, identical or similar reference symbols may be used for the same or similar components. In some aspects, in the drawings and related descriptions, descriptions of well-known functions and configurations may be omitted for clarity and brevity.

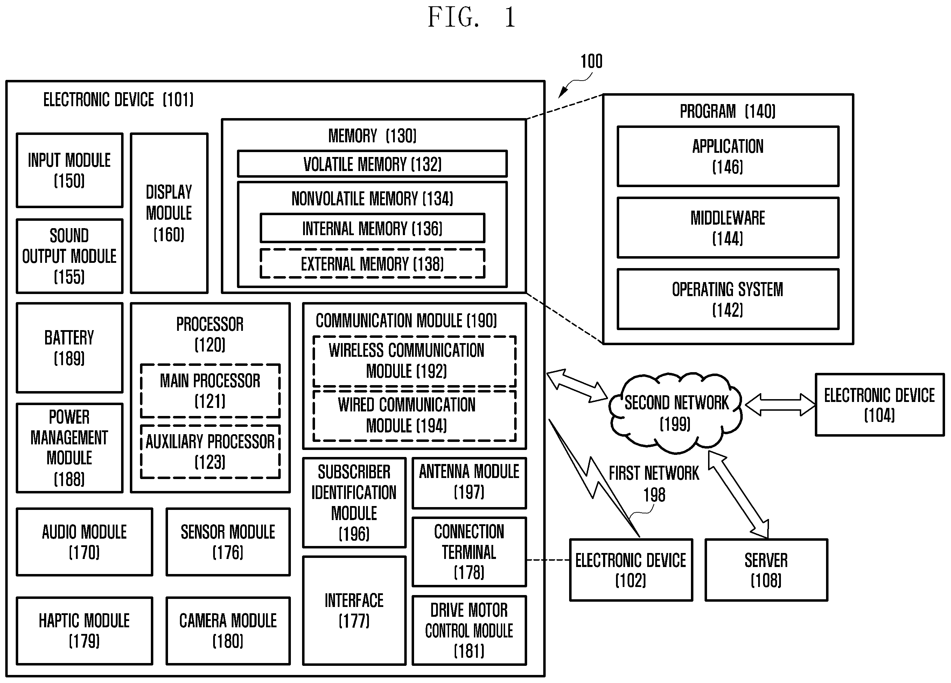

FIG. 1 is a block diagram illustrating an electronic device in a network environment according to an embodiment of the disclosure.

Referring to FIG. 1, an electronic device 101 in a network environment 100 may communicate with an external electronic device 102 via a first network 198 (e.g., a short-range wireless communication network), or at least one of an external electronic device 104 or a server 108 via a second network 199 (e.g., a long-range wireless communication network). According to an embodiment of the disclosure, the electronic device 101 may communicate with the external electronic device 104 via the server 108. According to an embodiment of the disclosure, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments of the disclosure, at least one of the components (e.g., the connecting terminal 178) may be omitted from the electronic device 101, or one or more other components may be added in the electronic device 101. In some embodiments of the disclosure, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment of the disclosure, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment of the disclosure, the processor 120 includes a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. In an example in which the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). According to an embodiment of the disclosure, the auxiliary processor 123 (e.g., an image signal processor or a communication processor) may be implemented as part of another component (e.g., the camera module 180 or the communication module 190) functionally related to the auxiliary processor 123. According to an embodiment of the disclosure, the auxiliary processor 123 (e.g., the neural processing unit) includes a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model includes a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 includes the volatile memory 132 or the non-volatile memory 134. The non-volatile memory 134 may include internal memory 136 and external memory 138.

The program 140 may be stored in the memory 130 as software, and may include, For example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, For example, a microphone, a mouse, a keyboard, a key (e.g., a button), or a digital pen (e.g., a stylus pen).

The sound output module 155 may output sound signals to the outside of the electronic device 101. The sound output module 155 may include, For example, a speaker or a receiver. The speaker may be used for general purposes, such as, for example, playing multimedia or playing record. The receiver may be used for receiving incoming calls. According to an embodiment of the disclosure, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment of the disclosure, the display module 160 includes a touch sensor adapted to detect a touch, or a pressure sensor adapted to measure the strength of force incurred by the touch.

The audio module 170 may convert a sound into an electrical signal and vice versa. According to an embodiment of the disclosure, the audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment of the disclosure, the sensor module 176 may include, For example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment of the disclosure, the interface 177 may include, For example, a high definition multimedia interface (HDMI), a universal serial bus (USB) interface, a secure digital (SD) card interface, or an audio interface.

A connecting terminal 178 includes a connector via which the electronic device 101 may be physically connected with the external electronic device (e.g., the external electronic device 102). According to an embodiment of the disclosure, the connecting terminal 178 may include, For example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment of the disclosure, the haptic module 179 may include, For example, a motor, a piezoelectric element, or an electric stimulator.

The camera module 180 may capture a still image or moving images. According to an embodiment of the disclosure, the camera module 180 includes one or more lenses, image sensors, image signal processors, or flashes.

The power management module 188 may manage power supplied to the electronic device 101. According to an embodiment of the disclosure, the power management module 188 may be implemented as at least part of, For example, a power management integrated circuit (PMIC).

The battery 189 may supply power to at least one component of the electronic device 101. According to an embodiment of the disclosure, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 includes one or more communication processors that are operable independently from the processor 120 (e.g., the application processor (AP)) and supports a direct (e.g., wired) communication or a wireless communication. According to an embodiment of the disclosure, the communication module 190 includes a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as, for example, BluetoothTM, wireless-fidelity (Wi-Fi) direct, or infrared data association (IrDA)) or the second network 199 (e.g., a long-range communication network, such as, for example, a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as, for example, the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment of the disclosure, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment of the disclosure, the antenna module 197 includes an antenna including a radiating element including a conductive material or a conductive pattern formed in or on a substrate (e.g., a printed circuit board (PCB)). According to an embodiment of the disclosure, the antenna module 197 includes a plurality of antennas (e.g., array antennas). In such a case, at least one antenna appropriate for a communication scheme used in the communication network, such as, for example, the first network 198 or the second network 199, may be selected, For example, by the communication module 190 (e.g., the wireless communication module 192) from the plurality of antennas. The signal or the power may then be transmitted or received between the communication module 190 and the external electronic device via the selected at least one antenna. According to an embodiment of the disclosure, another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module includes a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a lateral) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI).

According to an embodiment of the disclosure, commands or data may be transmitted or received between the electronic device 101 and the external electronic device 104 via the server 108 coupled with the second network 199. Each of the external electronic device 102 or 104 may be a device of a same type as, or a different type, from the electronic device 101. According to an embodiment of the disclosure, all or some of operations to be executed at the electronic device 101 may be executed at one or more of the external electronic device 102, the external electronic device 104, or the server 108. For example, if the electronic device 101 should perform a function or a service automatically, or in response to a request from a user or another device, the electronic device101, instead of, or in addition to, executing the function or the service, may request the one or more external electronic devices to perform at least part of the function or the service. The electronic device 101 may provide the outcome, with or without further processing of the outcome, as at least part of a reply to the request. To that end, a cloud computing, distributed computing, mobile edge computing (MEC), or client-server computing technology may be used, For example. The electronic device 101 may provide ultra low-latency services using, e.g., distributed computing or mobile edge computing. In another embodiment of the disclosure, the external electronic device 104 includes an Internet-of-things (IoT) device. The server 108 may be an intelligent server using machine learning and/or a neural network. According to an embodiment of the disclosure, the external electronic device 104 or the server 108 may be included in the second network 199. The electronic device 101 may be applied to intelligent services (e.g., a smart home, a smart city, a smart car, or healthcare) based on 5G communication technology or IoT-related technology.

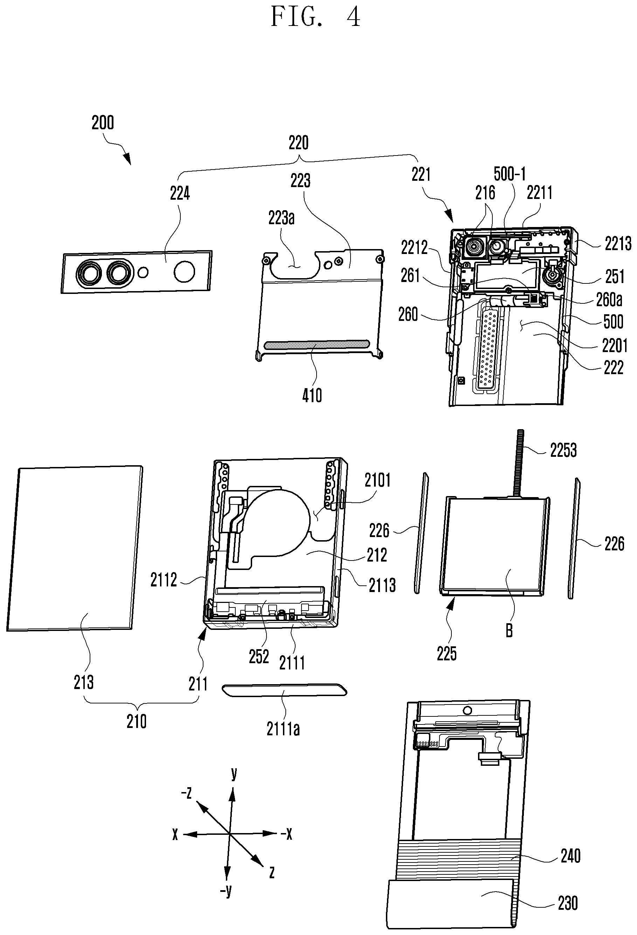

According to various embodiments of the disclosure, the sensor module 176 includes a movement distance detection sensor to detect a movement distance of a second housing (e.g., a second housing 220 in FIG. 4) from a first housing (e.g., a first housing 210 in FIG. 4) of an electronic device (e.g., an electronic device 200 of FIG. 4). In an embodiment of the disclosure, through movement of the second housing 220 from the first housing 210, the sensor module 176 may detect a slide-in state being a first state, a slide-out state being a second state, or an intermediate state being a third state between the slide-in state and the slide-out state. In a certain embodiment of the disclosure, the processor 120 may detect the movement distance in real time through the sensor module 176 while the second housing 220 is moved from the first housing 210, and control the display module 160 to display an object in correspondence to the changing display area through a flexible display (e.g., flexible display 230 in FIG. 4). In an embodiment of the disclosure, the electronic device 101 includes a drive motor control module 181 to control the operation of a drive motor (e.g., DC motor or stepping motor) (e.g., drive motor 260 in FIG. 4) disposed inside the electronic device. In an embodiment of the disclosure, the drive motor control module 181 may be replaced by the processor 120.

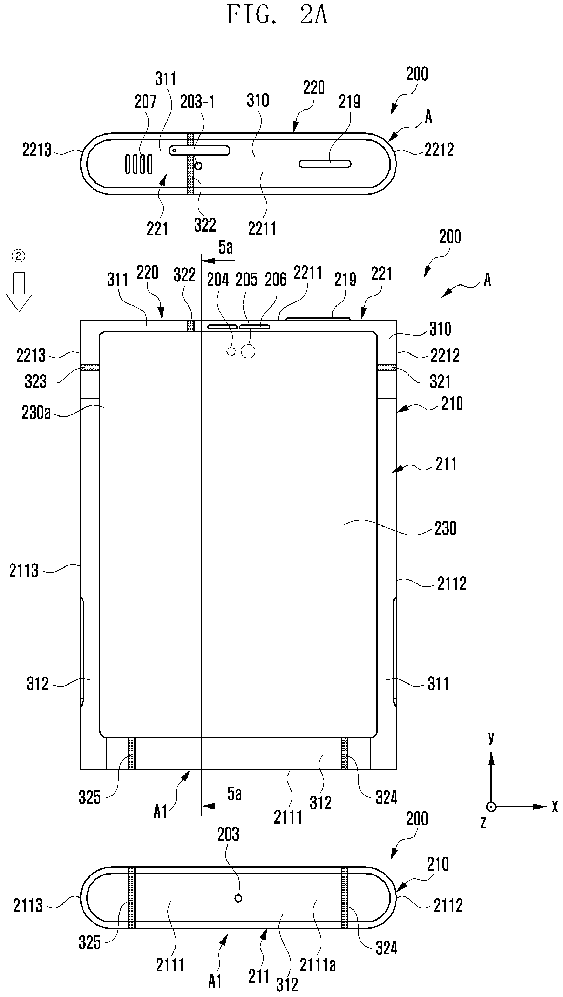

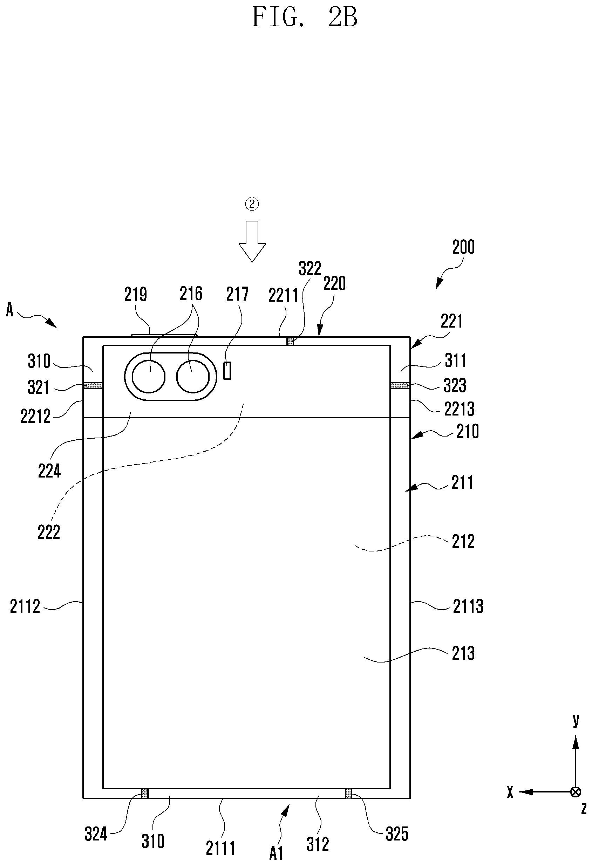

FIG. 2A and FIG. 2B are views illustrating a front surface and a rear surface of the electronic device in a slide-in state according to various embodiments of the present disclosure.

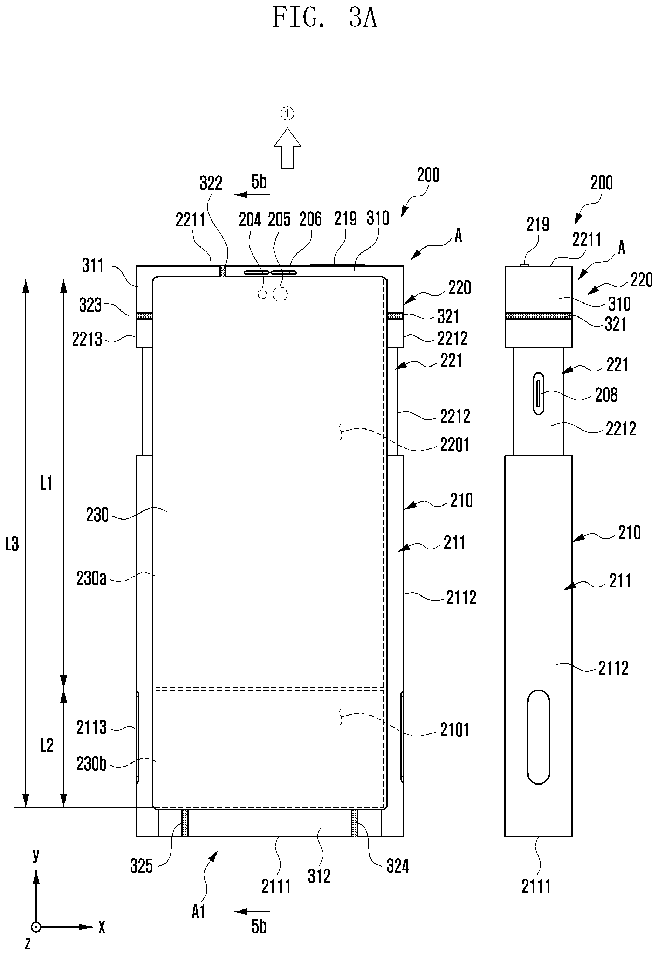

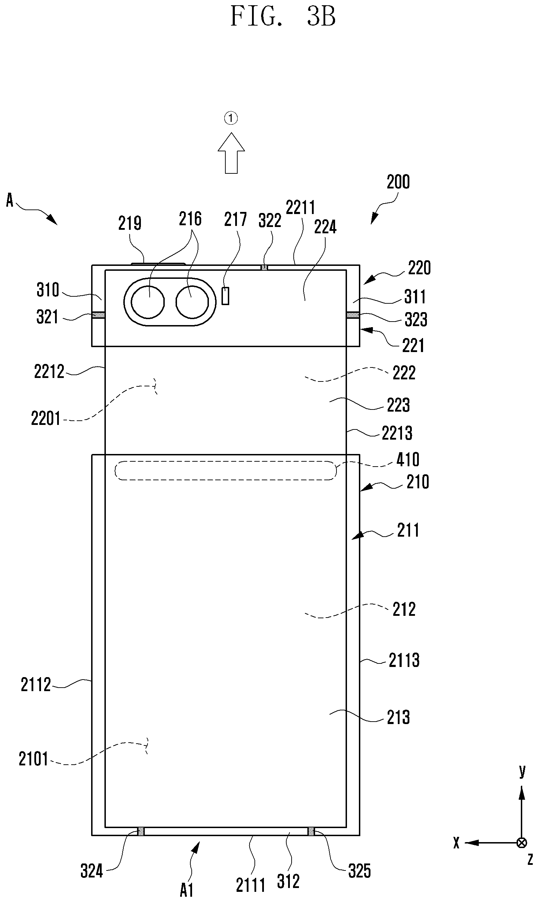

FIG. 3A and FIG. 3B are views illustrating a front surface and a rear surface of the electronic device in a slide-out state according to various embodiments of the present disclosure.

The electronic device 200 of FIG. 2A to FIG. 3B may be at least partially similar to the electronic device 101 of FIG. 1, or may further include other embodiments of the electronic device.

With reference to FIG. 2A to FIG. 3B, the electronic device 200 may include a first housing 210 (e.g., a book cover or a first housing structure), a second housing 220 (e.g., a front cover or a second housing structure) slidably coupled to the first housing 210 in a designated direction (e.g., a direction ① or a direction ②) (e.g., a ± y-axis direction), and a flexible display 230 (e.g., a rollable display, an expandable display, or a stretchable display) disposed to be supported through at least a portion of the first housing 210 and the second housing 220. In an embodiment, the second housing 220 may be slidably coupled with the first housing 210 to be slid out in a first direction (direction ①) or to be slid in in a second direction (direction ②) opposite to the first direction (direction ①), with respect to the first housing 210. In an embodiment, the electronic device 200 may be changed to a slide-in state as a first state, by at least a portion of the second housing 220 being accommodated in at least a portion of a first space 2101 formed through the first housing 210. In an embodiment, the electronic device 200 may be changed to a slide-out state as a second state, by at least a portion of the second housing 220 being moved in an outward direction (e.g., direction ①) from the first space 2101. In an embodiment, the electronic device 200 may include a support member (e.g., the support member 240 of FIG. 4) (e.g., a bendable member, an articulated hinge module, a multi-bar assembly, or a multi-bar) that forms the same plane with at least a portion of the second housing 220 at least partially in the slide-out state, and is accommodated in a manner of being bent into the first space 2101 of the first housing 210 at least partially in the slide-in state. In an embodiment, at least a portion of the flexible display 230 may be disposed to be supported by at least a portion of the second housing 220. In an embodiment, at least a portion of the remaining portion of the flexible display 230 may be disposed to be supported by the support member 240 (e.g., the support member 240 of FIG. 4). In an embodiment, the support member (e.g., the support member 240 of FIG. 4) may be disposed in a manner of being attached to a back surface of the flexible display 230. In an embodiment, at least a portion of the flexible display 230, in the slide-in state, may be disposed to be invisible from the outside by being accommodated in a manner of being bent into the first space 2101 of the first housing 210 while being supported by the support member (e.g., the support member 240 of FIG. 4). In an embodiment, at least a portion of the flexible display 230, in the slide-out state, may be moved to be visible from the outside while being supported by the support member (e.g., the support member 240 of FIG. 4) forming at least partially the same plane as the second housing 220.

According to various embodiments, the first housing 210 may include a first lateral member 211, and the second housing 220 may include a second lateral member 221. In an embodiment, the first lateral member 211 may include a first side surface 2111 disposed at a lower side of the electronic device 200 and having a first length, a second side surface 2112 extending from one end of the first side surface 2111 in a vertical direction (e.g., a y-axis direction) and having a second length, and a third side surface 2113 extending from the other end of the first side surface 2111 in parallel with the second side surface 2112 and having the second length. In an embodiment, the first lateral member 211 may be formed at least partially of a conductive member (e.g., metal). In some embodiments, the first lateral member 211 may be formed by a combination of a conductive member and a non-conductive member (e.g., polymer). In an embodiment, the first housing 210 may include a first extension member 212 extending from at least a portion of the first lateral member 211 to at least a portion of the first space 2101. In an embodiment, the first extension member 212 may be integrally formed with the first lateral member 211. In some embodiments, the first extension member 212 may be formed separately from the first lateral member 211 and may be structurally coupled with the first lateral member 211.

According to various embodiments, the second lateral member 221 may include a fourth side surface 2211 disposed at an upper side of the electronic device 200 and having a third length, a fifth side surface 2212 extending from one end of the fourth side surface 2211 in a vertical direction (e.g., a -y axis direction) to correspond to the second side surface 2112 and having a fourth length, and a sixth side surface 2213 extending from the other end of the fourth side surface 2211 in a direction parallel to the fifth side surface 2212 to correspond to the third side surface 2113 and having the fourth length. In an embodiment, the second lateral member 221 may be formed at least partially of a conductive member (e.g., metal). In some embodiments, the second lateral member 221 may be formed by a combination of a conductive member and a non-conductive member (e.g., polymer). In an embodiment, at least a portion of the second lateral member 221 may include a second extension member 222 extending to at least a portion of a second space 2201 of the second housing 220. In an embodiment, the second extension member 222 may be integrally formed with the second lateral member 221. In some embodiments, the second extension member 222 may be formed separately from the second lateral member 221 and may be structurally coupled with the second lateral member 221.

According to various embodiments, the second side surface 2112 and the fifth side surface 2212 may be slidably coupled with respect to each other. In an embodiment, the third side surface 2113 and the sixth side surface 2213 may be slidably coupled with respect to each other. In an embodiment, in the slide-in state, a portion of the fifth side surface 2212 may be disposed to be substantially invisible from the outside by being overlapped with the second side surface 2112. In an embodiment, in the slide-in state, the remaining portion of the fifth side surface 2212 may be disposed to be visible from the outside. In some embodiments, in the slide-in state, the fifth side surface 2212 may be disposed to be substantially invisible from the outside by being overlapped with the second side surface 2112. In an embodiment, in the slide-in state, a portion of the sixth side surface 2213 may be disposed to be substantially invisible from the outside by being overlapped with the third side surface 2113. In an embodiment, in the slide-in state, the remaining portion of the sixth side surface 2213 may be disposed to be visible from the outside. In some embodiments, in the slide-in state, the sixth side surface 2213 may be disposed to be substantially invisible from the outside by being overlapped with the third side surface 2113. In an embodiment, a portion of the second extension member 222, in the slide-in state, may be disposed to be visible from the outside. In some embodiments, in the slide-in state, the second extension member 222 may be disposed to be substantially invisible from the outside by being overlapped with the first extension member 212.

According to various embodiments, the first housing 210 may include a first rear cover 213 coupled with at least a portion of the first lateral member 211. In an embodiment, the first rear cover 213 may be disposed in a manner of being coupled with at least a portion of the first extension member 212. In some embodiments, the first rear cover 213 may be integrally formed with the first lateral member 211. In an embodiment, the first rear cover 213 may be formed of polymer, coated or colored glass, ceramic, metal (e.g., aluminum, stainless steel (STS), or magnesium), or a combination of at least two of these materials. In some embodiments, the first rear cover 213 may extend to at least a portion of the first lateral member 211. In some embodiments, the first rear cover 213 may be omitted, and at least a portion of the first extension member 212 may be replaced by the first rear cover 213.

According to various embodiments, the second housing 220 may include a second rear cover 223 coupled with at least a portion of the second lateral member 221. In an embodiment, the second rear cover 223 may be disposed in a manner of being coupled with at least a portion of the second extension member 222. In an embodiment, the second rear cover 223 may be integrally formed with the second lateral member 221. In an embodiment, the second rear cover 223 may be formed of polymer, coated or colored glass, ceramic, metal (e.g., aluminum, stainless steel (STS), or magnesium), or a combination of at least two of these materials. In some embodiments, the second rear cover 223 may extend to at least a portion of the second lateral member 221. In some embodiments, the second rear cover 223 may be omitted, and at least a portion of the second extension member 222 may be replaced by the second rear cover 223. In some embodiments, the second extension member 222 may be omitted, and the second rear cover 223 may be replaced by the second extension member 222. In an embodiment, the second housing 220 may include a window cover 224 disposed on at least a portion of the second rear cover. In an embodiment, the window cover 224, in the slide-in state, may be disposed in an area exposed to the outside of the second housing 220, and may be formed of a material easy for detecting an external environment through at least one camera module 216 and/or sensor module 217 disposed in the inner space 2201 of the second housing 220. For example, the window cover 224 may be formed of a glass and/or polymer material in which at least an area corresponding to the camera module 216 and/or the sensor module 217 is formed to be transparent. In some embodiments, the electronic device 200 may further include a cover member 2111a disposed to cover at least a portion of the first side surface 2111 of the first housing 210.

According to various embodiments, the flexible display 230 may include a first portion 230a (e.g., a flat portion) always visible from the outside, and a second portion 230b (e.g., a bendable portion or a bending portion) extending from the first portion 230a and accommodated in a manner of being at least partially bent into the first space 2101 of the first housing 210 so as not to be visible from the outside in the slide-in state. In an embodiment, at least a portion of the first portion 230a may be disposed to be supported by the second housing 220, and the remaining portion of the first portion 230a and the second portion 230b may be disposed to be supported at least partially by the support member (e.g., the support member 240 of FIG. 4). In an embodiment, the second portion 230b of the flexible display 230, in a state where the second housing 220 is slid out along the first direction (direction ①), may form substantially the same plane as the first portion 230a while being supported by the support member (e.g., the support member 240 of FIG. 4), and may be disposed to be visible from the outside. In an embodiment, the second portion 230b of the flexible display 230, in a state where the second housing 220 is slid in along the second direction (direction ②), may be accommodated in a manner of being bent into the first space 2101 of the first housing 210, and may be disposed not to be visible from the outside. Accordingly, a display surface area of the flexible display 230 may be varied as the second housing 220 is moved in a sliding manner along a designated direction (e.g., a ±y-axis direction) from the first housing 210.

According to various embodiments, a length of the flexible display 230 in a sliding direction (e.g., direction ① or direction ②) may be varied according to the sliding movement of the second housing 220 moved with respect to the first housing 210. For example, the flexible display 230, in the slide-in state, may have a first display surface area (e.g., an area corresponding to the first portion 230a) corresponding to a first length L1. In an embodiment, the flexible display 230, in the slide-out state, may be expanded to have a second display surface area (e.g., an area including the first portion 230a and the second portion 230b) which is larger than the first display surface area and corresponds to a third length L3 longer than the first length L1, according to a moving distance of the second housing 220 moved by a second length L2 with respect to the first housing 210.

According to various embodiments, the electronic device 200 may include at least one of an input device (e.g., a microphone 203-1), a sound output device (e.g., a receiver for calls 206 and/or a speaker 207), sensor modules 204 and 217, a camera module (e.g., a first camera module 205 or a second camera module 216), a connector port 208, a key input device 219, or an indicator (not illustrated), disposed in the second space 2201 of the second housing 220. In an embodiment, the electronic device 200 may include another input device (e.g., a microphone 203) disposed in the first housing 210. In some embodiments, the electronic device 200 may be configured such that at least one of the above-mentioned constituent elements is omitted, or other constituent elements are additionally included. In some embodiments, at least one of the above-mentioned constituent elements may be disposed in the first space 2101 of the first housing 210.

According to various embodiments, the input device may include the microphone 203-1. In some embodiments, the input device (e.g., the microphone 203-1) may include a plurality of microphones disposed to detect a direction of sound. The sound output device may include, for example, the receiver for calls 206 and the speaker 207. In an embodiment, the speaker 207 may correspond to the outside through at least one speaker hole formed in the second housing 220 at a position always exposed to the outside (e.g., the fourth side surface 2211) regardless of the slide-in/slide-out state. In an embodiment, the connector port 208, in the slide-out state, may correspond to the outside through a connector port hole formed in the second housing 220. In an embodiment, the connector port 208, in the slide-in state, may be hidden so as not to be visible from the outside. In some embodiments, the connector port 208, in the slide-in state, may correspond to the outside through an opening formed in the first housing 210 and formed to correspond to the connector port hole. In some embodiments, the receiver for calls 206 may include a speaker (e.g., a piezo speaker) operated while a separate speaker hole is excluded.

According to various embodiments, the sensor modules 204 and 217 may generate an electrical signal or a data value corresponding to an internal operating state of the electronic device 200 or an external environmental state. In an embodiment, the sensor modules 204, 217 may include, for example, a first sensor module 204 (e.g., a proximity sensor or an illuminance sensor) disposed on a front surface of the electronic device 200 and/or a second sensor module 217 (e.g., a heart rate monitoring (HRM) sensor) disposed on a rear surface of the electronic device 200. In an embodiment, the first sensor module 204 may be disposed under the flexible display 230 at the front surface of the electronic device 200. In an embodiment, the first sensor module 204 and/or the second sensor module 217 may include at least one of a proximity sensor, an illuminance sensor, a time of flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the camera module may include the first camera module 205 disposed on the front surface of the electronic device 200 and the second camera module 216 disposed on the rear surface of the electronic device 200. In an embodiment, the electronic device 200 may include a flash (not illustrated) located near the second camera module 216. In an embodiment, the camera modules 205, 216 may include one or a plurality of lenses, an image sensor, and/or an image signal processor. In an embodiment, the first camera module 205 may be disposed under the flexible display 230, and may be configured to photograph (or capture) a subject through a portion of an activation area (e.g., a display area) of the flexible display 230.

According to various embodiments, the first camera module 205 among the camera modules and the first sensor module 204 among the sensor modules 204, 217 may be disposed to detect an external environment through the flexible display 230. For example, the first camera module 205 or the first sensor module 204 may be disposed to be in contact with an external environment through a transmissive area formed in the flexible display 230 or a perforated opening in the second space 2201 of the second housing 220. In an embodiment, an area of the flexible display 230 facing the first camera module 205 may be formed as a transmissive area having a designated transmittance, as a portion of the activation area for displaying content. In an embodiment, the transmissive area may be formed to have a transmittance in a range of about 5% to about 20%. Such a transmissive area may include an area overlapping with an effective area (e.g., a field of view area) of the first camera module 205, through which light for forming an image by being formed on the image sensor passes. For example, a transmissive area of the flexible display 230 may include an area in which a pixel arrangement density and/or a wiring density is lower than its surroundings. For example, the transmissive area may be replaced by the above-mentioned opening. For example, some camera modules 205 may include an under display camera (UDC). In some embodiments, some sensor modules 204 may be disposed to perform their functions without being visually exposed through the flexible display 230 in the second space 2201 of the second housing 220.

According to various embodiments, a slide-in operation and/or a slide-out operation of the electronic device 200 may be automatically performed. For example, the slide-in operation and/or the slide-out operation of the electronic device 200 may be performed through gear engagement of a driving motor (e.g., the driving motor 260 of FIG. 4) including a pinion gear (e.g., the pinion gear 261 of FIG. 4) disposed in the second space 2201 of the second housing 220, and a rack (e.g., the rack 2253 of FIG. 4) including a rack gear disposed in the first space 2101 of the first housing 210, extending to at least a portion of the second space 2201, and coupled with the pinion gear 261. For example, when a processor (e.g., the processor 120 of FIG. 1) of the electronic device 200 detects a triggering signal for transitioning from the slide-in state to the slide-out state, or for transitioning from the slide-out state to the slide-in state, it may drive the driving motor (e.g., the driving motor 260 of FIG. 4) disposed inside the electronic device 200. In an embodiment, the triggering signal may include a signal according to a selection (e.g., touch) of an object displayed on the flexible display 230 or a signal according to a manipulation (e.g., pressing) of a physical button (e.g., a key button) included in the electronic device 200.

According to various embodiments, the electronic device 200 has a structure in which the second housing 220 is slid in and/or slid out with respect to the first housing 210 along a longitudinal direction (e.g., a vertical direction) (e.g., a ± y-axis direction) of the electronic device 200, but it is not limited thereto. For example, the electronic device 200 may have a structure in which the second housing 220 is slid in and/or slid out with respect to the first housing 210 along a width direction (e.g., a horizontal direction) (e.g., a ± x-axis direction) perpendicular to the longitudinal direction of the electronic device 200. In some embodiments, the electronic device 200 may be formed such that a length of a first side surface 2111 of the first housing 210 is longer than a length of a second side surface 2112. In such a case, a length of a fourth side surface 2211 of the second housing 220 may also be formed to be longer than a length of a fifth side surface 2212 correspondingly.

According to various embodiments, the electronic device 200 may include an antenna A (e.g., a first antenna) disposed through at least a portion of the second lateral member 221 of the second housing 220. In an embodiment, the electronic device 200 may include at least one unit conductive portion 310, 311 formed through at least one segmentation part 321, 322, 323. In an embodiment, the electronic device 200 may include a first conductive portion 310 disposed through a first segmentation part 321 disposed on the fifth side surface 2212 among the second lateral member 221 and a second segmentation part 322 disposed on the fourth side surface 2211. In an embodiment, the first conductive portion 310 may be used as at least one antenna A operating in at least one designated frequency band (e.g., a legacy band or an NR band) by being electrically connected to a wireless communication circuit (e.g., the wireless communication module 192 of FIG. 1) of the electronic device 200. For example, the at least one designated frequency band may include a frequency band in a range of about 600 MHz to 1000 MHz. In some embodiments, a second conductive portion 311 disposed through a third segmentation part 323 disposed on a sixth side surface and the second segmentation part 322 may also be used as an antenna. In an embodiment, the electronic device 200 may also include another antenna A1 (e.g., a second antenna) operating through a third conductive portion 312 disposed through a fourth segmentation part 324 and a fifth segmentation part 325 disposed spaced apart on the first side surface 2111 of the first housing 210.

According to an exemplary embodiment of the present disclosure, the electronic device 200 may include at least one dielectric 410 disposed in an overlapping area between the first housing 210 and the second housing 220 in the slide-out state. In an embodiment, the at least one dielectric 410 may be disposed so as not to be visible from the outside of the electronic device 200 in the slide-out state. In an embodiment, the at least one dielectric 410 is a sheet type, and may be disposed in a manner of being attached to the first housing 210 and/or the second housing 220. In an embodiment, the at least one dielectric 410 is disposed in a manner of being in surface contact with a first extension member 212 of a conductive material and a second extension member 222 of a conductive material, thereby inducing a stable ground condition through stable coupling (or electrical connection) between the two housings 210 and 220, which can help to reduce deterioration of radiation performance of the antennas A and A1 even in the slide-out state.

FIG. 4 is an exploded perspective view of the electronic device according to various embodiments of the present disclosure.

In describing the electronic device 200 of FIG. 4, the same reference numerals are assigned to constituent elements substantially the same as those of the electronic device 200 of FIG. 2A to FIG. 3B, and detailed descriptions thereof may be omitted.

With reference to FIG. 4, the electronic device 200 may include a first housing 210 including a first space 2101, a second housing 220 slidably coupled to the first housing 210 and including a second space 2201, a support member 240 (e.g., a bendable member or a multi-bar assembly) fixed to at least a portion of the second housing 220 and accommodated to be at least partially bendably into the first space 2101 according to a slide-in operation, a flexible display 230 disposed to be supported by at least a portion of the support member 240 and the second housing 220, and a driving module (e.g., a driving mechanism) for driving the second housing 220 from the first housing 210 in a slide-in direction (e.g., a -y axis direction) and/or a slide-out direction (e.g., a y-axis direction). In an embodiment, the first housing 210 may include a first lateral member 211 and a first rear cover 213 (e.g., a first rear bracket) coupled with at least a portion of the first lateral member 211 (e.g., at least a portion of the first extension member 212). In an embodiment, the first space 2101 may be formed through a combination of the first lateral member 211 and the first rear cover 213.

According to various embodiments, the second housing 220 may include a second lateral member 221, a second rear cover 223 (e.g., a second rear bracket) coupled with at least a portion of the second lateral member 221 (e.g., at least a portion of the second extension member 222), and a window cover 224 coupled with the second rear cover 223. In an embodiment, the second space 2201 may be formed through a combination of the second lateral member 221, the second rear cover 223, and the window cover 224. In an embodiment, a portion of the second rear cover 223 may include a notch area 223a formed so that the second camera module 216 disposed in the second space 2201 is exposed. In an embodiment, the notch area 223a may be protected from the outside through the window cover 224 disposed thereon. In an embodiment, the first housing 210 may further include a cover member 2111a disposed to cover at least a portion of the first side surface 2111. In some embodiments, the window cover 224 may be replaced through an extension of the second rear cover 223 and may be omitted.

According to various embodiments, the driving module may include a driving motor 260 disposed in the second space 2201 and including a pinion gear 261, and a rack gear 2253 fixed to a support bracket 225, extending from the first space 2101 to the second space 2201, and disposed to be gear-coupled with the pinion gear 261. In an embodiment, the electronic device 200 may further include a reduction module (e.g., a reduction gear assembly) structurally coupled with the driving motor so as to reduce a rotation speed and increase a driving force by being coupled with the driving motor 260. In an embodiment, the driving motor 260 may be disposed to be supported by the second extension member 222 in the second space 2201 of the second housing 220. In an embodiment, the driving motor 260 may be disposed to be supported through a motor bracket 260a fixed to the second extension member 222. In some embodiments, the motor bracket 260a may further include a guide structure for guiding the rack gear 2253 in a sliding direction. Accordingly, when the electronic device 200 is assembled, the pinion gear 261 may maintain a state of being gear-coupled with the rack gear 2253, and the pinion gear 261, receiving driving force from the driving motor 260, is moved along the rack gear 2253, whereby the second housing 220 may be moved with respect to the first housing 210.

According to various embodiments, the electronic device 200 may include a support bracket 225 fixed to the first space 2101 of the first housing 210. In an embodiment, the electronic device 200 may include a pair of guide rails 226 (e.g., a linear motion (LM) guide) for guiding both ends of the support member 240 in the sliding direction and simultaneously guiding the second housing 220 in the sliding direction by being fixed to both side surfaces of the support bracket 225. In an embodiment, the support bracket 225 and the pair of guide rails 226 may be fixed to the first housing 210 through a fastening member such as a screw.

According to various embodiments, the electronic device 200 may include at least one electrical component disposed in the second space 2201. In an embodiment, the at least one electrical component may include a board assembly 251 (e.g., a main board) (e.g., stacked boards or a main PCB) and a second camera module 216 disposed around the board assembly 251. In some embodiments, the at least one electrical component may be disposed in the first space 2101 of the first housing 210.

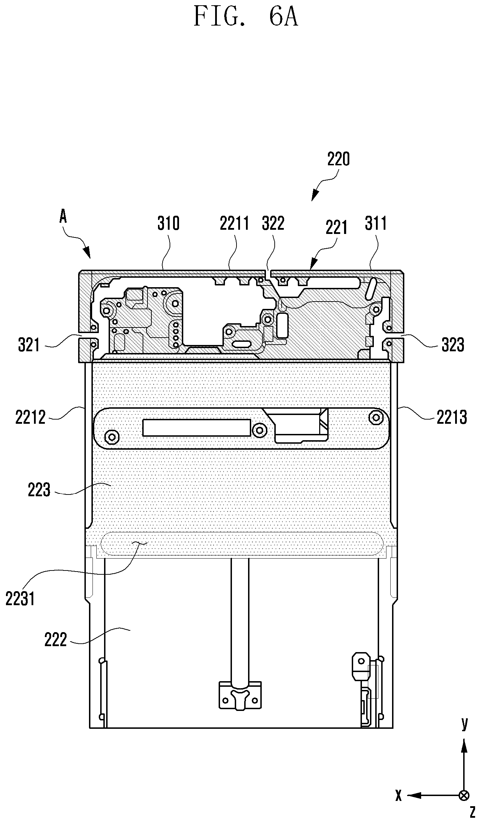

According to various embodiments, the electronic device 200 may include a first board 252 (e.g., a first sub-board) disposed between the first extension member 212 and the first rear cover 213 in the first housing 210. In an embodiment, the first board 252 may be electrically connected to the board assembly 251 through a flexible board (e.g., the flexible board F1 of FIG. 6A) (e.g., an FPCB, flexible printed circuit board or an FRC, flexible RF cable).

According to various embodiments, the electronic device 200 may include at least one dielectric 410 disposed on at least a portion of the second rear cover 223 facing the first extension member 212. In an embodiment, the at least one dielectric 410 may be attached to the second rear cover 223 in a sheet form. In an embodiment, the at least one dielectric 410 may be disposed in a manner of being in surface contact with an area overlapping at least the first extension member 212 in the slide-out state. Accordingly, the first housing 210 including the first extension member 212 formed of a conductive material, and the second housing 220 formed of a conductive material coupled with the second rear cover 223 formed of a conductive material, may be electrically connected through the at least one dielectric 410. In some embodiments, the at least one dielectric sheet 410 may be attached to at least a portion of the second extension member 222 facing the first extension member 212. Accordingly, by inducing a stable ground condition through stable coupling (or electrical connection) between the two housings 210 and 220, it can help to reduce deterioration of radiation performance of the antennas (the antennas A and A1 of FIG. 1A) even in the slide-out state.

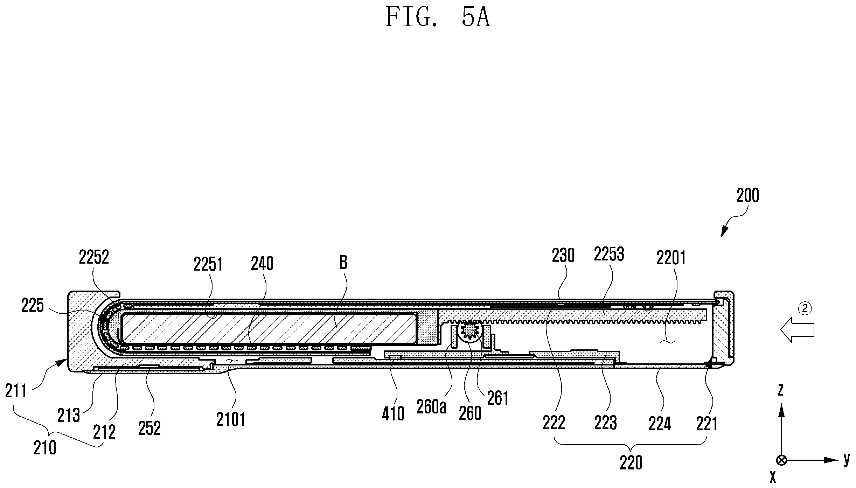

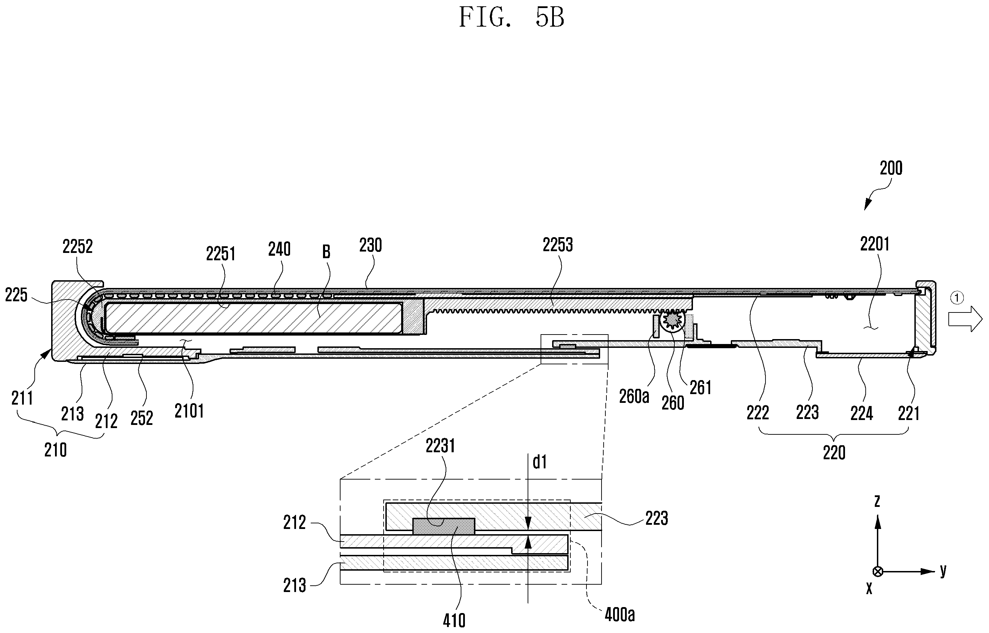

FIG. 5A is a cross-sectional view of the electronic device taken along line 5a-5a of FIG. 2A according to various embodiments of the present disclosure. FIG. 5B is a cross-sectional view of the electronic device taken along line 5b-5b of FIG. 3A according to various embodiments of the present disclosure.

In describing the electronic device 200 of FIG. 5A and FIG. 5B, the same reference numerals are assigned to constituent elements substantially the same as those of the electronic device 200 of FIG. 4, and detailed descriptions thereof may be omitted.

With reference to FIG. 5A and FIG. 5B, the electronic device 200 may include a first housing 210 having a first space 2101, a second housing 220 having a second space 2201, a support member 240 connected to the second housing 220 and at least partially accommodated in the first space 2101 in a slide-in state, a flexible display 230 disposed to be supported by at least a portion of the support member 240 and at least a portion of the second housing 220, and/or a driving motor 260 fixed to the first space 2101 and including a pinion gear 261 gear-coupled with a rack 2253 extending to the second space 2201. In an embodiment, the driving motor 260 may automatically move the second housing 220 in a slide-out direction (direction ①) or a slide-in direction (direction ②) with respect to the first housing 210 through gear engagement of the pinion gear 261 and the rack gear 2253. In an embodiment, the electronic device 200 may include a first rear cover 213 coupled with a first extension member 212 extending from a first lateral member 211 of the first housing 210. In an embodiment, the electronic device 200 may include a second rear cover 223 coupled with a second extension member 222 extending from a second lateral member 221 and a window cover 224 coupled with a portion of the second rear cover 223.

According to various embodiments, a portion of the second housing 220 may be accommodated in the first space 2101 of the first housing 210 in the slide-in state of the electronic device 200 (the state of FIG. 5A). In an embodiment, at least a portion of the flexible display 230 may be disposed to be invisible from the outside by being accommodated in a manner of being bent into the first space 2101 together with the support member 240. In this case, the flexible display 230 may have a first display surface area (e.g., a display area corresponding to the first portion 230a of FIG. 3A) exposed to the outside.

According to various embodiments, at least a portion of the second housing 220 may be transitioned to a slide-out state in which it is at least partially moved outward from the first housing 210 along the first direction (direction ①) through driving of the driving motor 260. In an embodiment, the flexible display 230, in the slide-out state of the electronic device 200 (the state of FIG. 5B), is supported by the support bracket 225 and moves together with the support member 240, whereby a portion slid in the first space 2101 may be exposed to be at least partially visible from the outside. In this case, the flexible display 230 may have a second display surface area (e.g., a display area including the first portion 230a and the second portion 230b of FIG. 3A) expanded beyond the first display surface area, which is exposed to the outside.

According to various embodiments, the electronic device 200 may include at least one dielectric 410 disposed on at least a portion of the second rear cover 223 facing the first extension member 212. In an embodiment, the at least one dielectric 410, in the slide-out state, may be located in at least a portion of an overlapping area 400a overlapping at least the second rear cover 223. In an embodiment, the at least one dielectric 410 may be disposed in a manner of being attached to the second rear cover 223. In an embodiment, the at least one dielectric 410 may be attached in a manner of being accommodated in a recess 2231 formed lower than a surface of the second rear cover 223. In an embodiment, the at least one dielectric 410 is attached to the recess 2231 and is located higher than an outer surface of the second rear cover 223, whereby the at least one dielectric 410 may be disposed to be in contact with the first extension member 212 of the first housing 210 when the first housing 210 and the second housing 220 are coupled. Such a seating structure through the recess 2231 of the dielectric 410 reduces a phenomenon in which the dielectric 410 arbitrarily moves or is separated from the overlapping area 400a due to friction during the slide-in/slide-out operation of the electronic device 200, and by making a coupling gap d1 between the two housings 210, 220 as small as possible while forming a thickness of the dielectric 410 thicker, it can help to prevent the inflow of external foreign substances and improve operating reliability. For example, the at least one dielectric 410 may be formed to have a thickness for preventing or reducing a scratch phenomenon due to contact between the first housing 210 and the second housing 220 in the slide-out state. In an embodiment, the at least one dielectric 410 may include at least one of nylon, polyester, adhesive tape, or sponge. In some embodiments, the at least one dielectric 410 may be replaced by a conductive tape having a predetermined thickness.

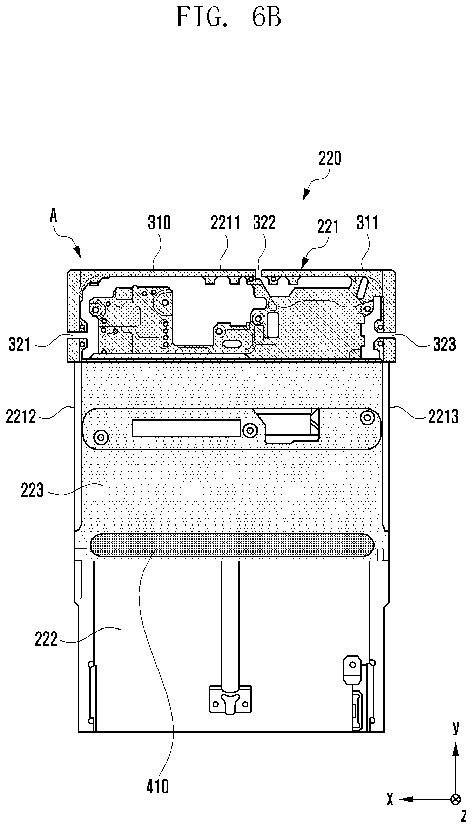

FIG. 6A is a configuration view of a second housing according to various embodiments of the present disclosure. FIG. 6B is a view illustrating a state in which a dielectric is disposed in the second housing according to various embodiments of the present disclosure.

With reference to FIG. 6A and FIG. 6B, the second housing 220 may include a second lateral member 221 forming at least a portion of an appearance of the electronic device 200 and a second rear cover 223 coupled with at least a portion of the second lateral member 221. In an embodiment, the second rear cover 223 and the second lateral member 221 may be formed of a conductive material (e.g., metal). In an embodiment, the second rear cover 223 may be integrally formed with the second lateral member 221. In an embodiment, the second housing 220 may include a first conductive portion 310 disposed through a first segmentation part 321 and/or a second segmentation part 322 disposed spaced apart in the second lateral member 221. In an embodiment, the first conductive portion 310 may be used as a portion of the appearance of a side surface (e.g., a fourth side surface 2211 and/or a fifth side surface 2212) of the electronic device 200 so as to be visible from the outside. In an embodiment, the first conductive portion 310 may be operated as an antenna A configured to transmit or receive a wireless signal in a designated frequency band (e.g., about 600 MHz to 1 GHz) through a communication circuit (e.g., the wireless communication module 192 of FIG. 1) disposed inside the electronic device 200. In some embodiments, the second housing 220 may include a second conductive portion 311 disposed through a third segmentation part 323 disposed spaced apart from the second segmentation part 322. For example, the second conductive portion 311 may also be used as an antenna.

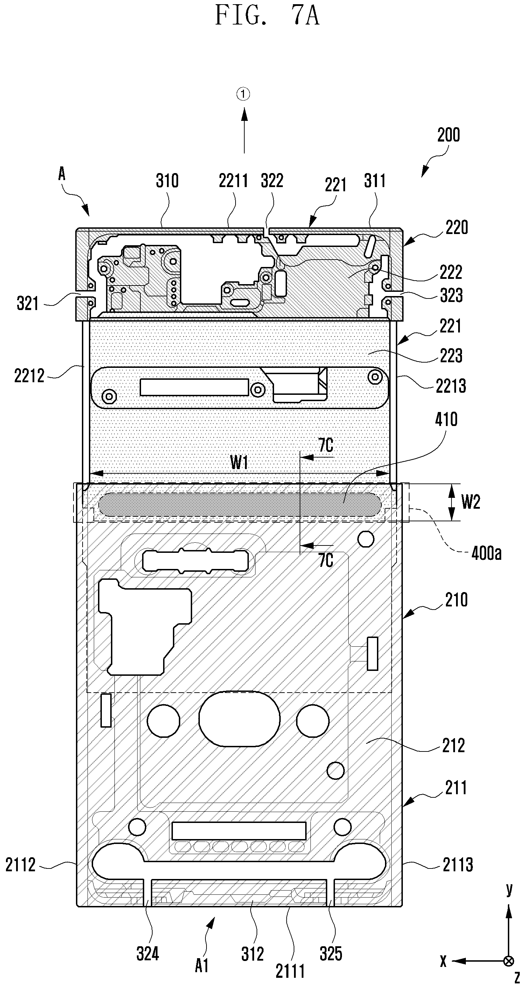

According to various embodiments, the second rear cover 223 may include a recess 2231 formed in at least a portion of an overlapping area (e.g., the overlapping area 400a of FIG. 7A) facing a first extension member (e.g., the first extension member 212 of FIG. 7A) of a first housing (e.g., the first housing 210 of FIG. 7A) in the slide-out state of the electronic device 200. In an embodiment, the second housing 220 may include a dielectric 410 disposed in a manner of being partially seated in the recess 2231. In an embodiment, the dielectric 410 may be formed to have a size substantially corresponding to the overlapping area (e.g., the overlapping area 400a of FIG. 7A), and may be seated in the recess 2231.

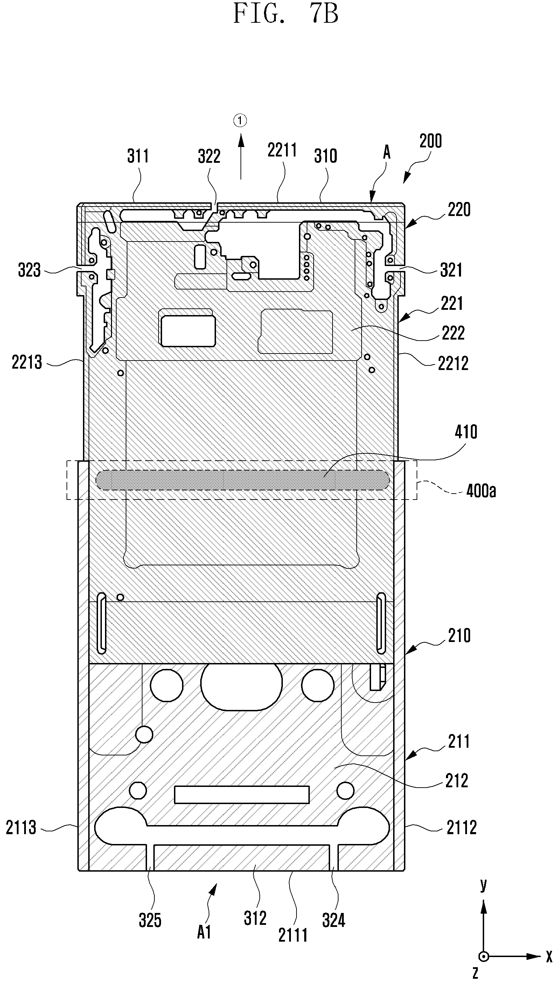

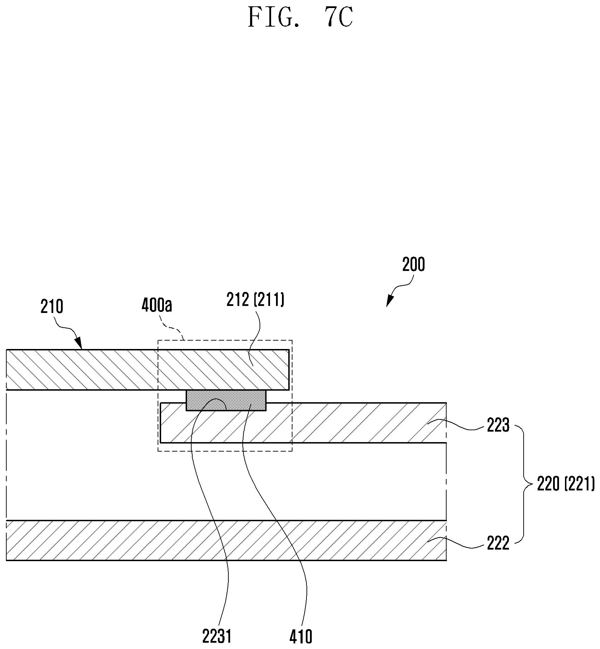

FIG. 7A and FIG. 7B are views illustrating a rear surface and a front surface of the electronic device including a dielectric in a slide-out state according to various embodiments of the present disclosure. FIG. 7C is a partial cross-sectional view of the electronic device taken along line 7c-7c of FIG. 7A according to various embodiments of the present disclosure.

In describing the electronic device 200 of FIG. 7A to FIG. 7C, the same reference numerals are assigned to the same constituent elements as those of the second housing 220 of FIG. 6A and FIG. 6B, and detailed descriptions thereof may be omitted.

With reference to FIG. 7A to FIG. 7C, the electronic device may include a first housing and a second housing slidably coupled with the first housing. In an embodiment, the first housing 220 may include a third conductive portion 312 disposed through a fourth segmentation part 324 and a fifth segmentation part 325 disposed spaced apart in the first lateral member 211. In an embodiment, the third conductive portion 312 may be used as a portion of the appearance (or exterior) of a side surface (e.g., a first side surface 2111) of the electronic device 200 so as to be visible from the outside. In an embodiment, the third conductive portion 312 may be operated as another antenna A1 configured to transmit or receive a wireless signal in a designated frequency band (e.g., about 600 MHz to 1 GHz) through a communication circuit (e.g., the wireless communication module 192 of FIG. 1) disposed inside the electronic device 200. In some embodiments, the antenna A and another antenna A1 may be configured to operate in different frequency bands.

According to various embodiments, the electronic device 200 may include an overlapping area 400a in which the first housing 210 and the second housing 220 are overlapped in the slide-out state. In an embodiment, the overlapping area 400a may be set to have a width W1 substantially equal to a width of the electronic device 200 and a designated length W2 in a direction parallel to a length of the electronic device 200 (e.g., a y-axis direction). In an embodiment, the overlapping area 400a may include an area in which the first extension member 212 of the first housing 210 and the second rear cover 223 of the second housing 220 face each other in the slide-out state. In an embodiment, the overlapping area 400a may be determined through the width W1 and/or the length W2 of the second rear cover 223 that is slid in to an inside of the first housing 210 without being exposed to the outside in the slide-out state. In some embodiments, the overlapping area 400a may include overlapping areas in which a second side surface 2112 and a third side surface 2113 of the first housing 210 face a fifth side surface 2212 and a sixth side surface 2213 of the second housing 220, respectively, in the slide-out state. For example, the length W2 of the second rear cover 223 may be determined in consideration of a smooth sliding movement of the electronic device 200 and an efficient arrangement design of peripheral structures.

According to various embodiments, the dielectric 410 may be located in at least a portion of the overlapping area 400a overlapping at least the second rear cover 223 in the slide-out state of the electronic device 200. In an embodiment, the dielectric 410 may be attached in a manner of being accommodated in a recess 2231 formed lower than the surface of the second rear cover 223. In some embodiments, the dielectric 410 may be attached to the surface of the second rear cover 223 without the recess 2231. In an embodiment, the dielectric 410 may be disposed to be in contact with the first extension member 212 of the first housing 210 when the first housing 210 and the second housing 220 are coupled. Accordingly, the dielectric 410 induces a stable ground condition through stable coupling (or electrical connection) between the two housings 210, 220, which can help to reduce deterioration of radiation performance of the antenna A and/or another antenna A1 even in the slide-out state.

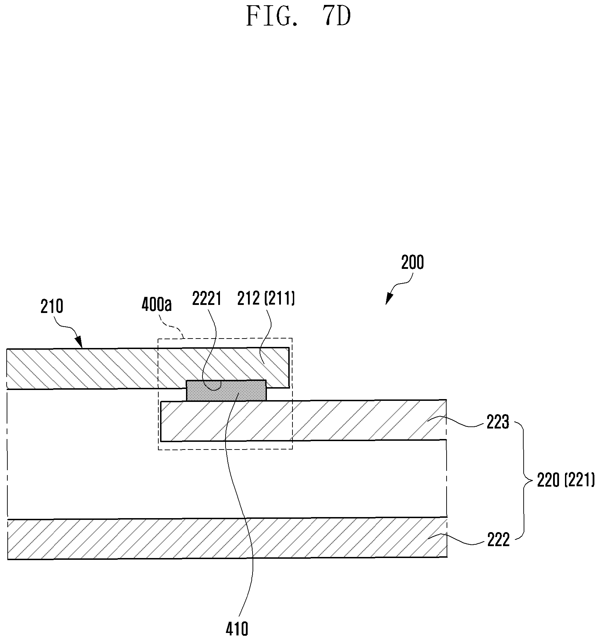

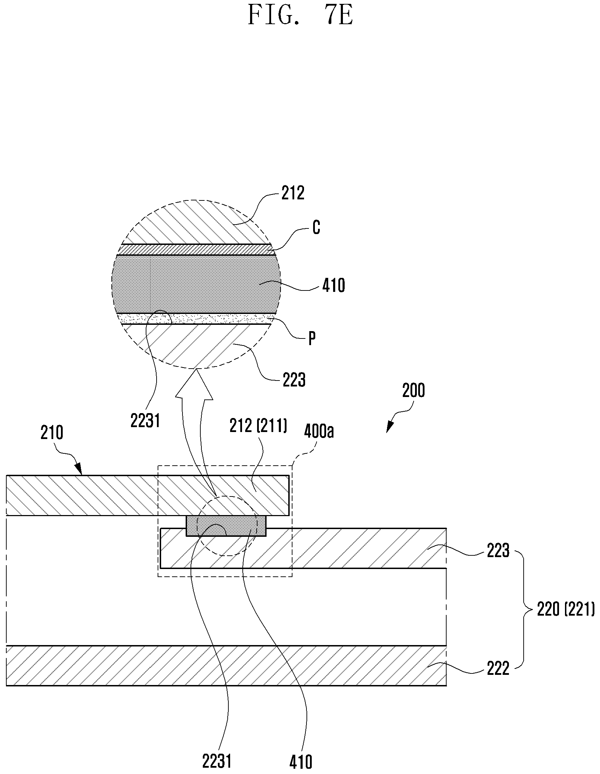

FIG. 7D and FIG. 7E are modified embodiments of FIG. 7C according to various embodiments of the present disclosure.

With reference to FIG. 7D, the dielectric 410 may be attached to the first extension member 212 of the first housing 210 and may be disposed in a manner of being in contact with the second rear cover 223. In this case, the first extension member 212 may include a recess 2121 formed lower than an outer surface of the first extension member 212, and the dielectric 410 may be disposed in a manner of being seated in the recess 2121.

With reference to FIG. 7E, in the configuration of FIG. 7A, the dielectric 410 may be attached to the recess 2231 of the second rear cover 223 through an adhesive member P (e.g., an adhesion layer). In an embodiment, since the dielectric 410 is moved in a manner of contacting the first extension member 212, frictional force may be generated. Such frictional force may cause a driving loss of a driving motor (e.g., the driving motor 260 of FIG. 4). In an embodiment, the electronic device 200 may further include a coating layer C for friction reduction attached to the dielectric 410, in order to reduce frictional force due to contact of the dielectric 410 between the dielectric 410 and the first extension member 212. In an embodiment, the coating layer C for friction reduction may include a Teflon coating layer or a hard coating layer. In some embodiments, the dielectric 410 may be formed in a manner in which at least two dielectrics having different permittivities are stacked.

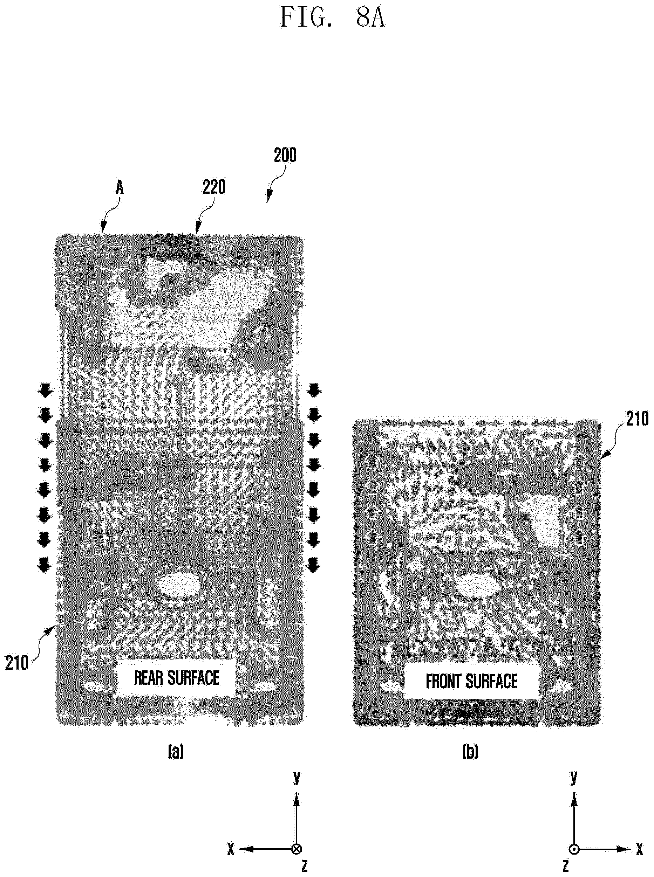

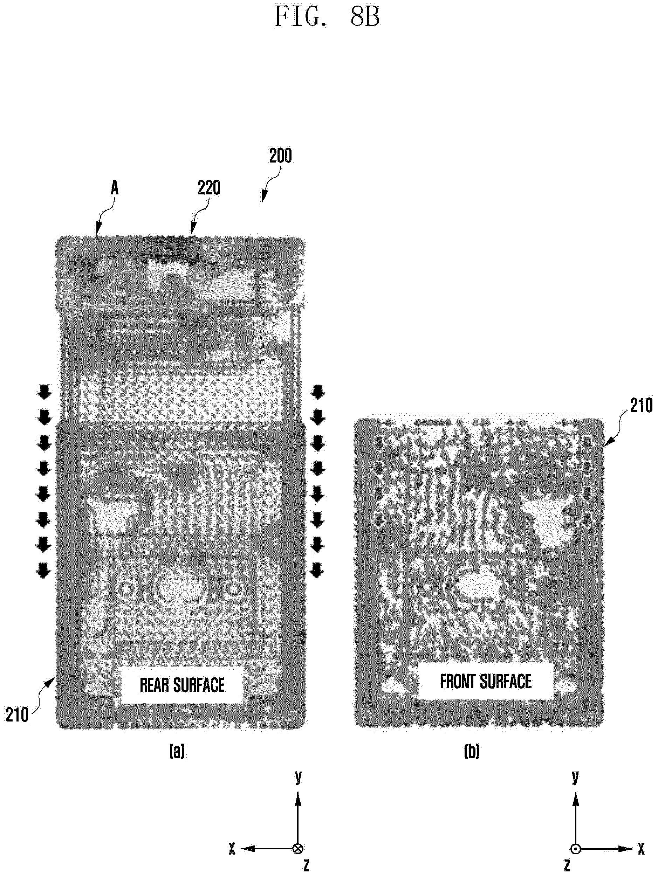

FIG. 8A and FIG. 8B are views comparing changes in current distribution of the electronic device according to whether or not a dielectric is present in a slide-out state according to various embodiments of the present disclosure.

FIG. 8A is a comparative example of the electronic device 200 to which the dielectric 410 is not applied, and it can be confirmed that, in the slide-out state, an outer current of the second housing 220 and an inner current of the first housing 210 flow in opposite directions. This may mean that radiation performance is deteriorated as a parasitic resonance frequency is generated in an operating frequency band (e.g., a low band) of the antenna A.

FIG. 8B is the electronic device 200 according to an exemplary embodiment of the present disclosure to which the dielectric 410 is applied, and it can be confirmed that, in the slide-out state, the outer current of the second housing 220 and the inner current of the first housing 210 flow in the same direction. This may mean that even if the electronic device 200 is in the slide-out state, the first housing 210 and the second housing 220 can satisfy a stable ground condition through the dielectric 410, which can help to improve the radiation performance of the antenna A.

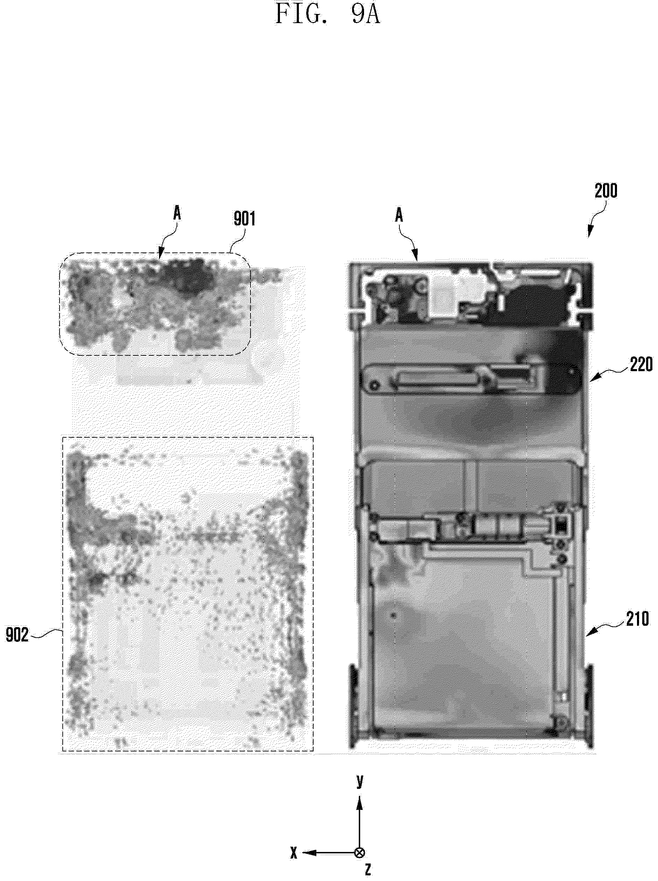

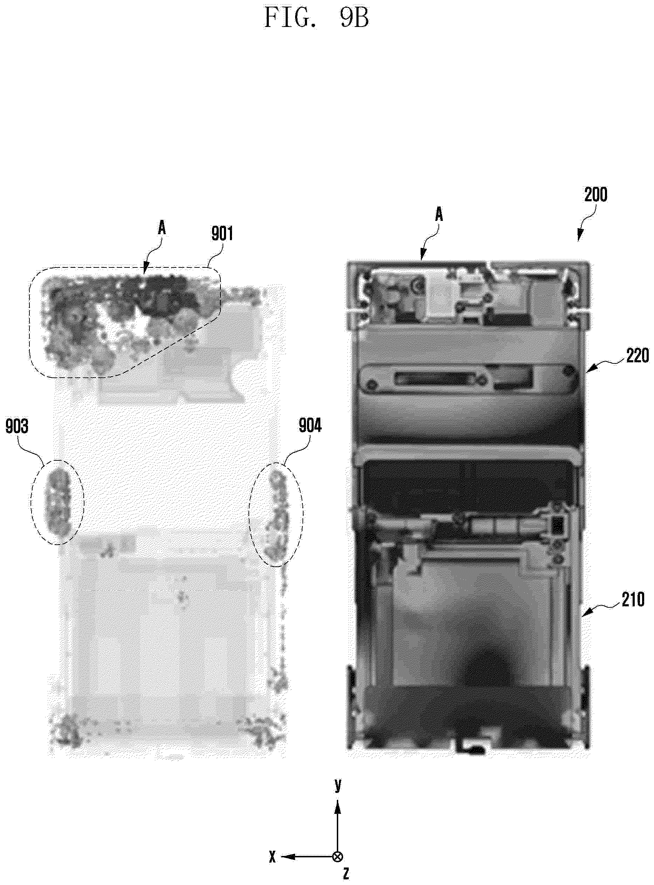

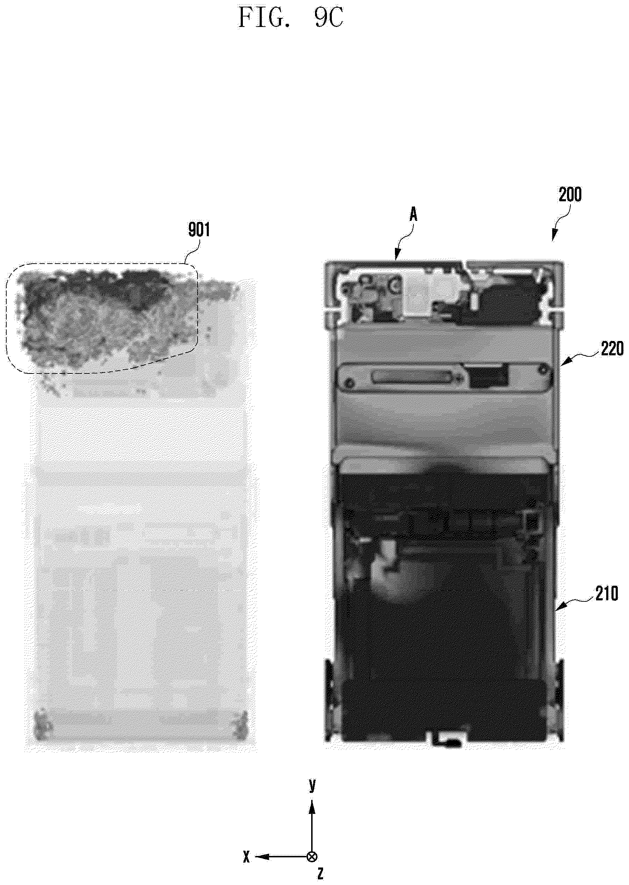

FIG. 9A is a view of a comparative example illustrating a current distribution of the electronic device when no dielectric is present in a slide-out state. FIG. 9B is a view of a comparative example illustrating a current distribution of the electronic device when a conductive contact of a point contact type is disposed in a slide-out state. FIG. 9C is a view illustrating a current distribution of the electronic device when a dielectric is disposed in a slide-out state according to various embodiments of the present disclosure.

FIG. 9A is a comparative example of the electronic device 200 to which the dielectric 410 is not applied, and it can be confirmed that, in the slide-out state, while a current distribution appears in an area (area 901) where the antenna A is located, a current distribution through unstable coupling appears over the entire area (area 902) of the first housing 210 and the second housing 220. This may mean that a parasitic resonance frequency may be generated in the operating frequency band (e.g., a low band) of the antenna A, and thereby the radiation performance is deteriorated.

FIG. 9B is a comparative example in which the dielectric 410 is not applied and conductive contacts of a point contact manner are applied to both side surfaces of the electronic device 200, and it can be confirmed that, in the slide-out state, while a current distribution appears in the area (area 901) where the antenna A is located, a current distribution through unstable coupling appears in overlapping areas (area 903 and area 904) (e.g., portions where the conductive contacts are disposed) of both side surfaces of the first housing 210 and the second housing 220. This is improved compared to the case of FIG. 9A, but it may mean that the radiation performance is deteriorated as the parasitic resonance frequency is still generated in the operating frequency band (e.g., a low band) of the antenna A.

FIG. 9C is the electronic device 200 according to an exemplary embodiment of the present disclosure to which the dielectric 410 is applied, and it can be seen that, in the slide-out state, the current distribution appears only in the area (area 901) where the antenna A is located. This may mean that even if the electronic device 200 is in the slide-out state, the first housing 210 and the second housing 220 can satisfy a stable ground condition through the dielectric 410, which can help to secure the radiation performance of the antenna A.

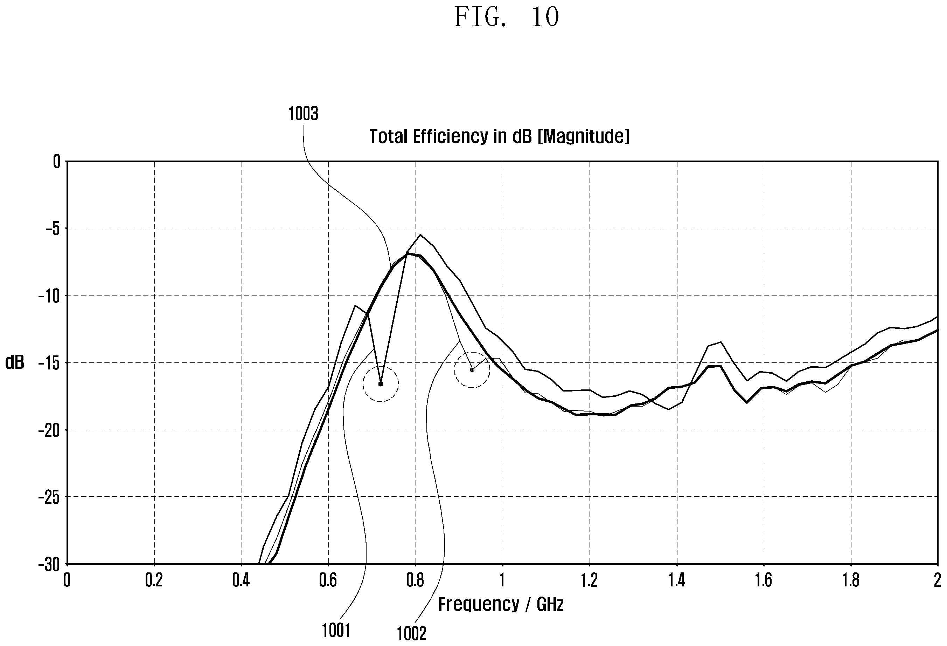

FIG. 10 is a graph comparing radiation performance of an antenna according to whether or not a dielectric is present in a slide-out state according to various embodiments of the present disclosure.

With reference to FIG. 10, when the antenna A is operated in a designated frequency band (e.g., about 600 MHz to 1 GHz), it can be confirmed that, in the slide-out state, when the dielectric 410 is not applied between the first housing 210 and the second housing 220 as in FIG. 9A (graph 1001), a parasitic resonance frequency of about a 720 MHz band is generated, and when the conductive contact of the point contact manner is applied as in FIG. 9B (graph 1002), the parasitic resonance frequency of about a 930 MHz band is still generated. This may mean that the radiation performance of the antenna is deteriorated.

On the other hand, as in FIG. 9C, when the dielectric 410 is applied between the first housing 210 and the second housing 220 according to an embodiment of the present invention (graph 1003), it can be confirmed that the above-mentioned parasitic resonance frequencies are removed from the operating frequency band of the antenna A. This may mean that even if the electronic device 200 is in the slide-out state, the first housing 210 and the second housing 220 can satisfy a stable ground condition through the dielectric 410, which can help to secure the radiation performance of the antenna A. Here, the meaning of 'removal' of the parasitic resonance frequency may mean that the parasitic resonance frequency has been moved to a band outside the operating frequency band (out band) of the antenna A through stable coupling of the first and second housings 210, 220 through the dielectric 410.

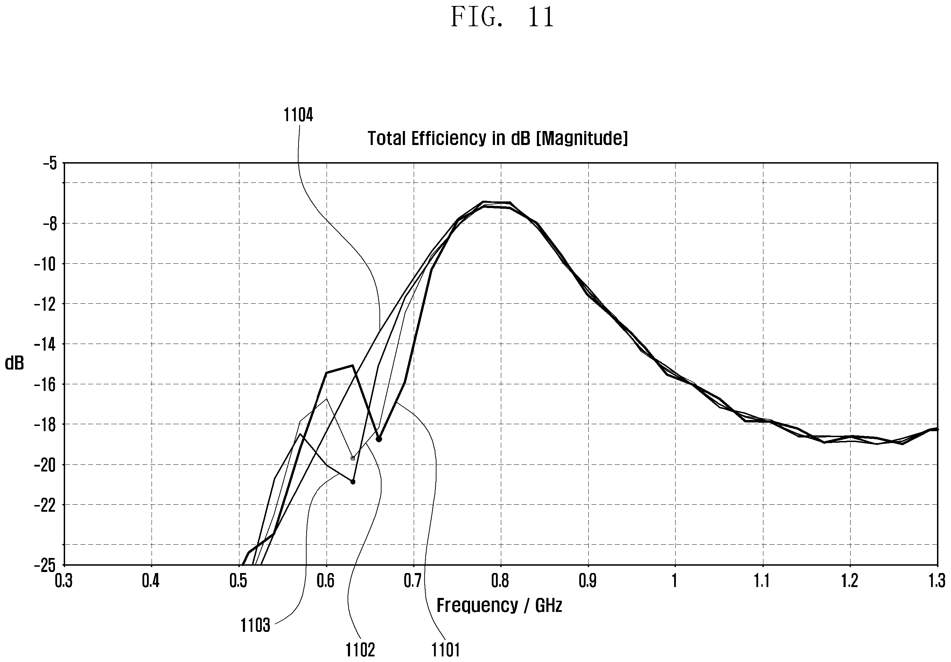

FIG. 11 is a graph comparing radiation performance of an antenna according to whether or not a dielectric is present and a change in an overlapping area of two housings in a slide-out state according to various embodiments of the present disclosure.

With reference to FIG. 11, when the antenna A is operated in a designated frequency band (e.g., about 600 MHz to 1 GHz), in the slide-out state, when a width (e.g., the width W1 of FIG. 7A) of the overlapping area 400a of the first housing 210 and the second housing 220 is set to 65 mm and a length (e.g., the length W2 of FIG. 7A) is set to 5 mm, and the dielectric 410 is not applied (graph 1101), it can be confirmed that a parasitic resonance frequency of about a 660 MHz band is generated. In an embodiment, in a state where the dielectric 410 is not applied and the width W1 of the overlapping area 400a is fixed at 65 mm, when the length W2 of the overlapping area 400a is sequentially increased to 7 mm (graph 1102) and 9 mm (graph 1103), it can be confirmed that the parasitic resonance frequency is low shifted. This may mean that, in the slide-out state, when a coupling surface area of the overlapping area 400a of the first housing 210 and the second housing 220 is increased, the parasitic resonance frequency can be removed from the operating frequency band of the antenna A. However, since an increase in the overlapping area 400a restricts the operations of the first housing 210 and the second housing 220 and provides difficulty in arrangement design with structures disposed inside the electronic device 200, there is a limit.

On the other hand, according to an exemplary embodiment of the present disclosure, when the width W1 of the overlapping area 400a of the first housing 210 and the second housing 220 is set to 65 mm and the length W2 is set to 5 mm in the slide-out state, and the dielectric 410 is applied (graph 1104), it can be confirmed that the parasitic resonance frequency is removed from the operating frequency band of the antenna A.

For example, in the slide-out state, even if the first housing 210 and the second housing 220 have a relatively small overlapping area 400a, the parasitic resonance frequency can be efficiently removed through the dielectric 410, which may mean that it can induce smooth slide-in/slide-out operation of the electronic device 200 and can help in an efficient arrangement design of peripheral structures.

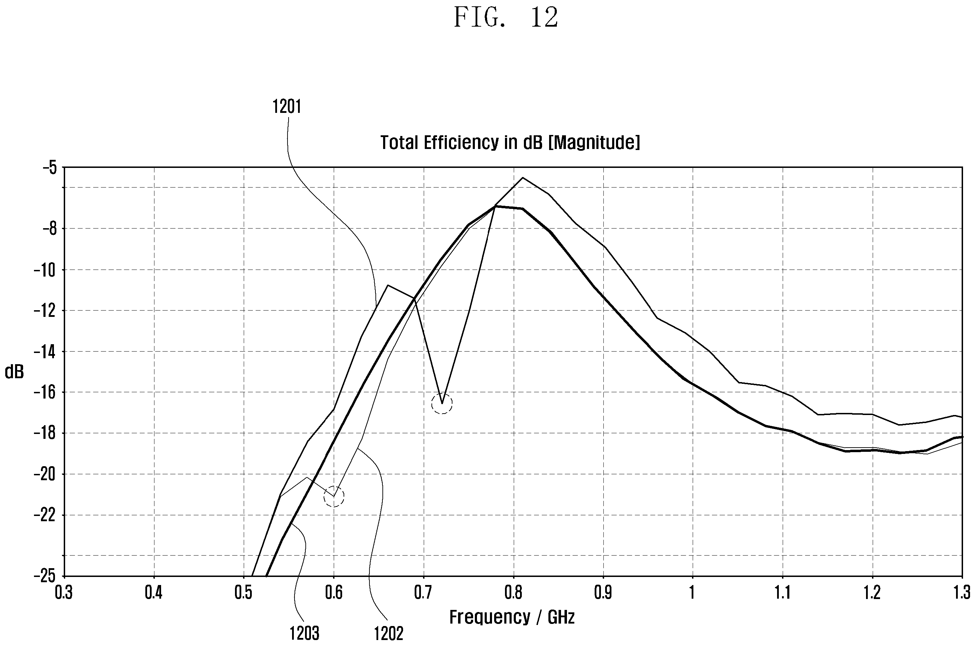

FIG. 12 is a graph comparing radiation performance of an antenna according to a change in a surface area of a dielectric in a slide-out state according to various embodiments of the present disclosure.

With reference to FIG. 12, when the antenna A is operated in a designated frequency band (e.g., about 600 MHz to 1 GHz), in the slide-out state, when the dielectric 410 is not applied between the first housing 210 and the second housing 220 (graph 1201), it can be confirmed that a parasitic resonance frequency of about a 720 MHz band is generated. Also, in the slide-out state, when the width (e.g., the width W1 of FIG. 7A) of the overlapping area 400a of the first housing 210 and the second housing 220 is set to 65 mm and the length (e.g., the length W2 of FIG. 7A) is set to 5 mm, and the dielectric 410 having a width of 5 mm and a length of 5 mm is applied to the overlapping area 400a (graph 1202), it can be confirmed that the parasitic resonance frequency is still generated within the operating frequency band of the antenna A. In such a case, although a low band parasitic component does not completely disappear, it may be at an applicable level considering switching through a matching circuit such as a passive element (e.g., a capacitor or an inductor).

On the other hand, according to an exemplary embodiment of the present disclosure, when the dielectric 410 having a width of 65 mm and a length of 5 mm to have the same size as the surface area of the overlapping area 400a is applied to the overlapping area 400a (graph 1203), it can be confirmed that the parasitic resonance frequency is removed from the operating frequency band of the antenna A. This may mean that removal of the parasitic resonance frequency can be determined according to the size of the dielectric 410 disposed in the overlapping area 400a.

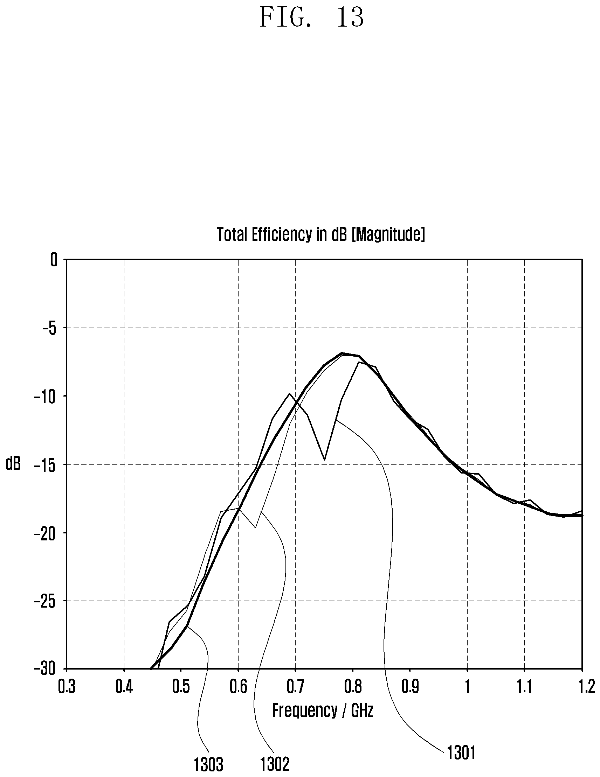

FIG. 13 is a graph comparing radiation performance of an antenna according to a change in permittivity of a dielectric in a slide-out state according to various embodiments of the present disclosure.

With reference to FIG. 13, when the antenna A is operated in a designated frequency band (e.g., about 600 MHz to 1 GHz), in the slide-out state, when the dielectric 410 is not applied between the first housing 210 and the second housing 220 (graph 1301), it can be confirmed that a parasitic resonance frequency of about a 720 MHz band is generated. Also, in the slide-out state, when a dielectric (e.g., FR-4) having a permittivity of 4.3 is applied to the overlapping area 400a of the first housing 210 and the second housing 220 (graph 1302), although a parasitic resonance frequency is generated within the operating frequency band of the antenna A, it may be moved to a level where it can be removed through a matching element (e.g., a passive element).

On the other hand, when the dielectric 410 having a permittivity of 12 is applied to the overlapping area 400a, it can be confirmed that the parasitic resonance frequency is removed from the operating frequency band of the antenna A. This may mean that removal of the parasitic resonance frequency can be determined according to the permittivity of the dielectric 410 disposed in the overlapping area 400a.

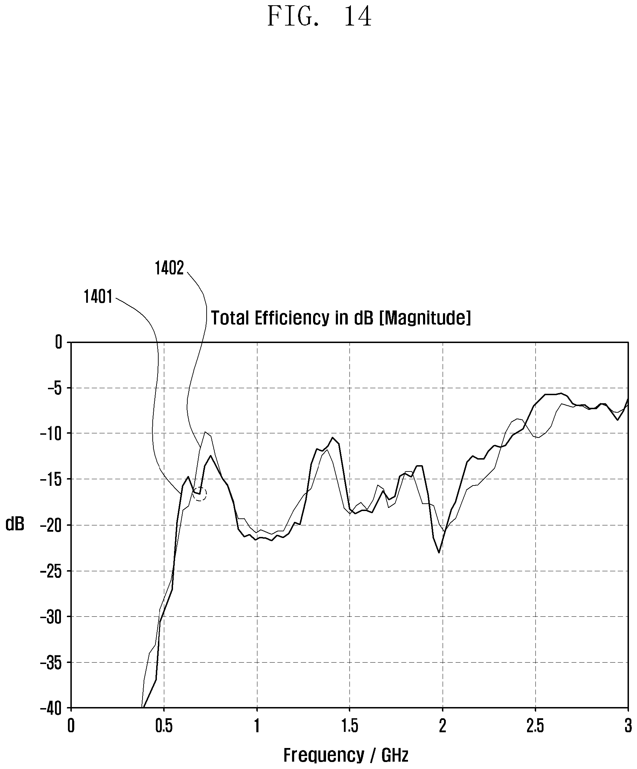

FIG. 14 is a graph comparing radiation performance of another antenna according to whether or not a dielectric is present in a slide-out state according to various embodiments of the present disclosure.

With reference to FIG. 14, when another antenna A1 using a third conductive portion 312 disposed in the first housing 210 of FIG. 7A is operated in a designated frequency band (e.g., about 600 MHz to 1 GHz), in the slide-out state, when the dielectric 410 is not applied to the overlapping area 400a of the first housing 210 and the second housing 220 (graph 1401), a parasitic resonance frequency of about a 690 MHz band is generated, whereas, when the dielectric 410 is applied between the first housing 210 and the second housing 220 according to an exemplary embodiment of the present disclosure (graph 1402), it can be confirmed that the parasitic resonance frequency is removed from the operating frequency band of another antenna A1. This may mean that, in the slide-out state of the electronic device 200, when the dielectric 410 is disposed in the overlapping area 400a of the first housing 210 and the second housing 220, radiation performance is improved not only for the antenna A disposed in the second housing 220 but also for another antenna A1 disposed in the first housing 210.

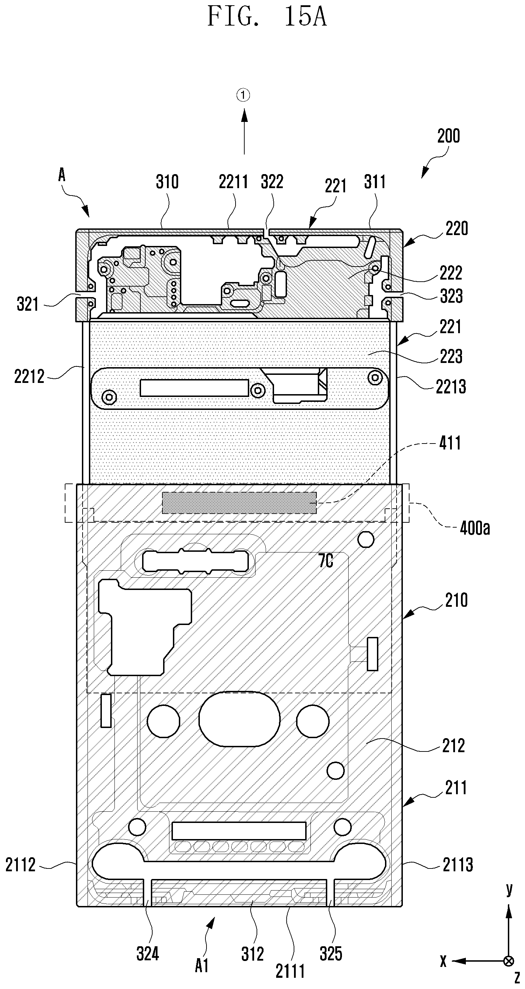

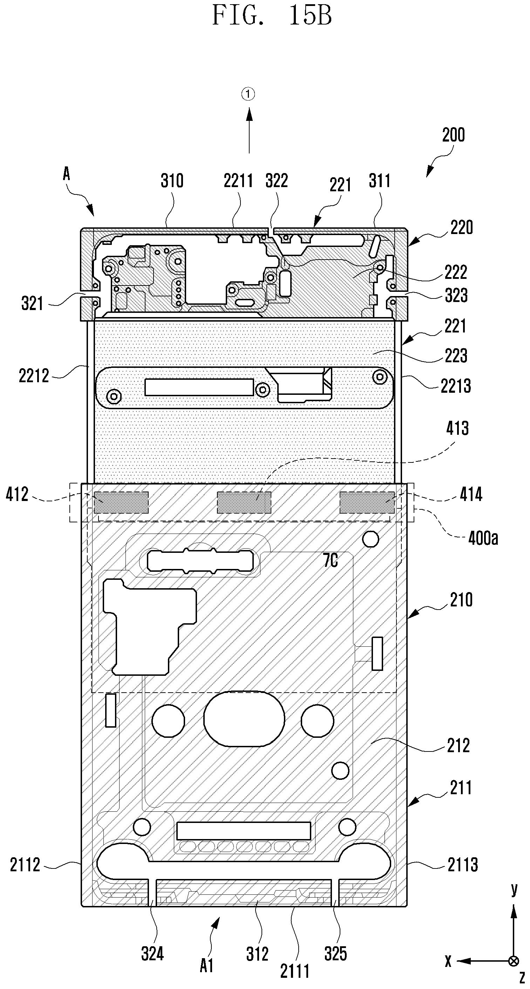

FIG. 15A and FIG. 15B are views of the electronic device illustrating an arrangement structure of a dielectric in a slide-out state according to various embodiments of the present disclosure.

In describing the electronic device 200 of FIG. 15A and FIG. 15B, the same reference numerals are assigned to configurations substantially the same as those of the electronic device 200 of FIG. 7A, and detailed descriptions thereof may be omitted.

As illustrated in FIG. 15A, the electronic device 200 may include an overlapping area 400a in which the first extension member 212 of the first housing 210 and the second rear cover 223 of the second housing 220 are overlapped in the slide-out state. In an embodiment, the electronic device 200 may include a dielectric 411 (e.g., the dielectric 410 of FIG. 7A) disposed in the overlapping area 400a. In an embodiment, the dielectric 411 may be formed to have a size smaller than a surface area of the overlapping area 400a.

As illustrated in FIG. 15B, the electronic device 200, in the slide-out state, may include a plurality of dielectrics 412, 413, and 414 disposed in the overlapping area 400a between the first extension member 212 of the first housing 210 and the second rear cover 223 of the second housing 220. In an embodiment, the plurality of dielectrics 412, 413, and 414 may be disposed to be spaced apart at designated intervals in the overlapping area 400a. In an embodiment, the plurality of dielectrics 412, 413, and 414 may have the same or different permittivities. As illustrated, the plurality of dielectrics 412, 413, and 414 are illustrated as three dielectrics, but two or four or more dielectrics may be disposed to be spaced apart at designated intervals.

In some embodiments, some of the dielectrics may be attached to the second rear cover, and the remaining dielectrics may be disposed in a manner of being attached to the first extension member 212. In this case, in the slide-out state, some dielectrics may be disposed so as to overlap or not to overlap with at least a portion of the remaining dielectrics.

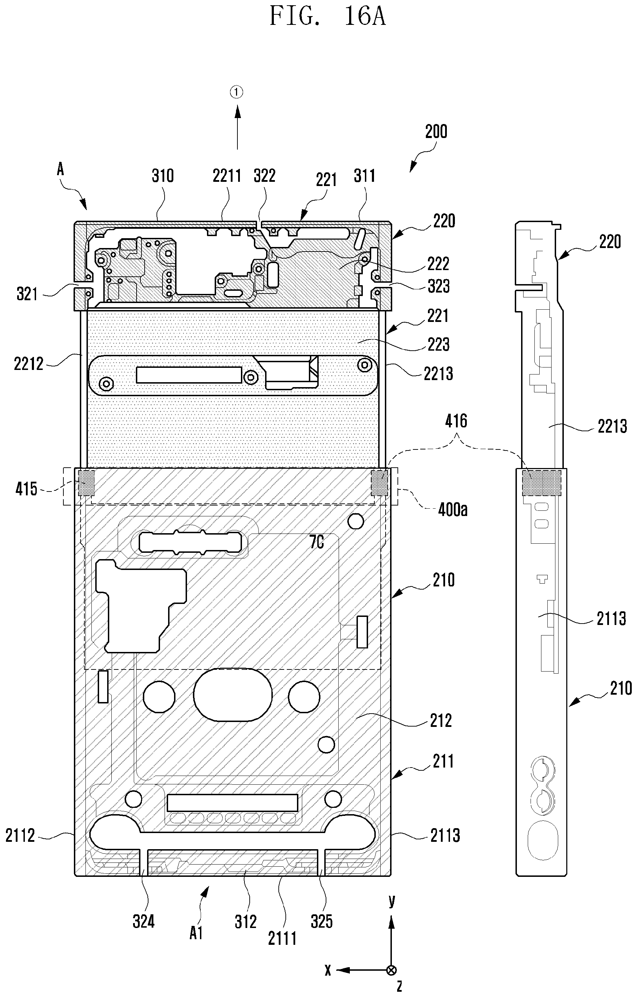

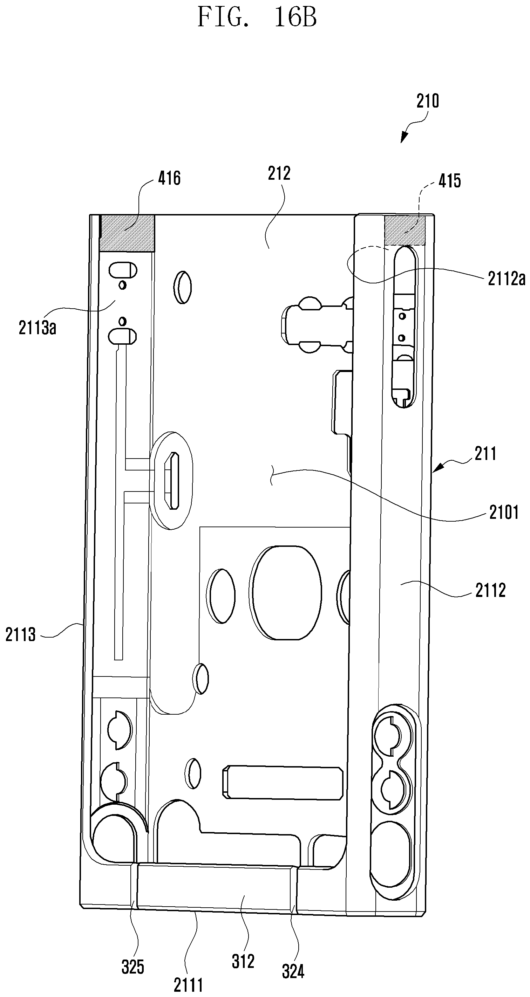

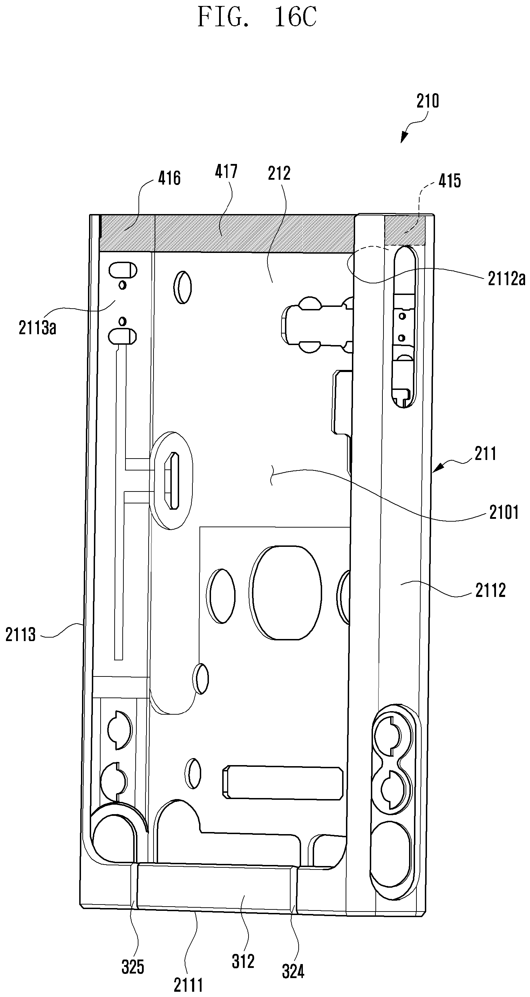

FIG. 16A is a plan view and a side view of the electronic device illustrating a state in which dielectrics are disposed on a side surface according to various embodiments of the present disclosure. FIG. 16B is a perspective view of a first housing in which the dielectrics of FIG. 16A are disposed according to various embodiments of the present disclosure. FIG. 16C is a perspective view of a first housing illustrating a modified embodiment of FIG. 16B according to various embodiments of the present disclosure.

In describing the electronic device 200 of FIG. 16A to FIG. 16C, the same reference numerals are assigned to configurations substantially the same as those of the electronic device 200 of FIG. 7A, and detailed descriptions thereof may be omitted.

With reference to FIG. 16A and FIG. 16B, the electronic device 200 may include a first dielectric 415 and a second dielectric 416 respectively disposed on both side surfaces in an area corresponding to the overlapping area 400a between the first housing 210 and the second housing 210 in the slide-out state. In an embodiment, the first dielectric 415 may be disposed in a manner of being attached to an inner side surface 2112a corresponding to the second side surface 2112 of the first housing 210 and an inner side surface 2113a corresponding to the third side surface 2113. For example, although not illustrated, the first dielectric 415 and the second dielectric 416 may be disposed in a manner of being at least partially accommodated in recesses formed on the inner side surface 2112a corresponding to the second side surface 2112 of the first housing 210 and the inner side surface 2113a corresponding to the third side surface 2113. Accordingly, in the slide-out state of the electronic device 200, the first dielectric 415 is in contact with the fifth side surface 2212 of the second lateral member 221 of the second housing 220, and the second dielectric 416 is in contact with the sixth side surface 2213 of the second lateral member 221 of the second housing 220, whereby a stable coupling can be induced. In some embodiments, the first dielectric 415 and/or the second dielectric 416 may be disposed on the fifth side surface 2212 and/or the sixth side surface 2213 of the second housing 220 in an area corresponding to the overlapping area 400a between the first housing 210 and the second housing 210.

With reference to FIG. 16C, in the configuration of FIG. 16B, it may further include a third dielectric 417 connecting the first dielectric 415 and the second dielectric 416 and disposed on the first extension member 212 in the first space 2101 of the first housing 210. In an embodiment, in the slide-out state of the electronic device 200, the third dielectric 417 may be in contact with the second rear cover 223 of the second housing 220. For example, the first, second, and third dielectrics 415, 416, 417 may also be utilized as a sealing member that blocks inflow of external foreign substances between the first housing 210 and the second housing 220. In some embodiments, at least two dielectrics among the first, second, and third dielectrics 415, 416, and 417 may be integrally formed. In some embodiments, at least one dielectric among the first, second, and third dielectrics 415, 416, and 417 may be disposed on the fifth side surface 2212 and/or the sixth side surface 2213 of the second housing 220 in an area corresponding to the overlapping area 400a between the first housing 210 and the second housing 210 in the slide-out state.

According to various embodiments, an electronic device may include: a first housing (e.g., the first housing 210 of FIG. 7A) formed of a conductive material; a second housing (e.g., the second housing 220 of FIG. 7A) slidably coupled to the first housing, including at least one first conductive portion (e.g., the first conductive portion 310 of FIG. 7A), and formed of a conductive material; a communication circuit disposed in an inner space of the electronic device and configured to transmit and/or receive a wireless signal in a first frequency band through the at least one first conductive portion; and at least one dielectric (e.g., the dielectric 410 of FIG. 7A) disposed between the first housing and the second housing, wherein, in a slide-out state, the electronic device may include an overlapping area (e.g., the overlapping area 400a of FIG. 7A) in which the first housing and the second housing at least partially overlap each other, and the at least one dielectric may be disposed in the overlapping area.

According to various embodiments, in the slide-out state, an operating band of a parasitic resonance frequency generated through coupling of the first housing and the second housing may be determined by a contact surface area between the at least one dielectric and the first and second housings.

According to various embodiments, in the slide-out state, an operating band of a parasitic resonance frequency generated through coupling of the first housing and the second housing may be determined by a permittivity of the at least one dielectric.

According to various embodiments, the at least one dielectric may be disposed in a manner of being attached to any one housing of the first housing or the second housing at least in the overlapping area, and being in surface contact with the remaining housing.

According to various embodiments, a coating layer for frictional force reduction (e.g., the coating layer C for friction reduction of FIG. 7E) formed on a surface of the at least one dielectric facing the remaining housing may be included.

According to various embodiments, the coating layer for friction reduction may include a Teflon coating layer or a hard coating layer.

According to various embodiments, the housing to which the at least one dielectric is attached includes a recess (e.g., the recess 2231 of FIG. 7C) formed lower than an outer surface, and the at least one dielectric may be disposed in a manner of being at least partially accommodated in the recess.

According to various embodiments, the at least one dielectric may include a plurality of dielectrics (e.g., the plurality of dielectrics 411, 412, and 413 of FIG. 15B) disposed to be spaced apart at designated intervals at least in the overlapping area.

According to various embodiments, at least some dielectrics among the plurality of dielectrics may have different permittivities.

According to various embodiments, the at least one dielectric may include at least one of nylon, polyester, adhesive tape, or sponge.

According to various embodiments, the at least one dielectric may be disposed in a manner of being attached to any one housing of the first housing or the second housing at least in the overlapping area, and being close to the remaining housing.

According to various embodiments, the first housing may include a first lateral member (e.g., the first lateral member 211 of FIG. 7A) forming a portion of a side surface of the electronic device and a first extension member (e.g., the first extension member 212 of FIG. 7A) extending from the first lateral member to a first space of the first housing, and the second housing may include a second lateral member (e.g., the second lateral member 221 of FIG. 7A) forming a portion of the side surface of the electronic device and a second extension member (e.g., the second extension member 222 of FIG. 7A) extending from the second lateral member to a second space of the second housing.

According to various embodiments, the at least one dielectric may be disposed at least between the first extension member and the second extension member in the overlapping area.

According to various embodiments, the at least one dielectric (e.g., the first dielectric 415 and the second dielectric 416 of FIG. 16B) may be disposed at least between the first lateral member and the second lateral member in the overlapping area.

According to various embodiments, the at least one dielectric (e.g., the first dielectric 415, the second dielectric 416, and the third dielectric 417 of FIG. 16C) may be disposed to extend seamlessly from between the first lateral member and the second lateral member to between the first extension member and the second extension member in the overlapping area.

According to various embodiments, a rear cover (e.g., the rear cover 223 of FIG. 7A) formed of a conductive material coupled with the second lateral member is included, and the at least one dielectric may be disposed between the rear cover and the first extension member.

According to various embodiments, the at least one dielectric may be disposed in a manner of being at least partially accommodated in a recess (e.g., the recess 2231 of FIG. 7A) formed in the rear cover (e.g., the second rear cover 223 of FIG. 7A).

According to various embodiments, the at least one dielectric may be disposed in a manner of being at least partially accommodated in a recess (e.g., the recess 2121 of FIG. 7C) formed in the first extension member (e.g., the first extension member 212 of FIG. 7C).

According to various embodiments, a support member (e.g., the support member 240 of FIG. 4) bendably connected with the second housing and a flexible display (e.g., the flexible display 230 of FIG. 4) disposed to be supported by the second housing and the support member, and in a slide-in state, at least a portion of which is accommodated into an inner space (e.g., the first space 2101 of FIG. 7A) of the first housing, may be included.

According to various embodiments, the first housing includes at least one second conductive portion (e.g., the third conductive portion 312 of FIG. 7A), and the communication circuit may be configured to transmit or receive a wireless signal in a second frequency band through the at least one second conductive portion.

Further, the embodiments of the present disclosure disclosed in the present specification and illustrated in the drawings are provided as particular examples for easily explaining the technical contents according to the embodiment of the present disclosure and helping understand the embodiment of the present disclosure, but not intended to limit the scope of the embodiment of the present disclosure. Accordingly, the scope of the various embodiments of the present disclosure should be interpreted as including all alterations or modifications derived from the technical teachings of the various embodiments of the present disclosure in addition to the disclosed embodiments.

## Claims

1. An electronic device, comprising:
a first housing (210) formed of a conductive material;
a second housing (220) slidably coupled to the first housing, comprising at least one first conductive portion (310), and formed of a conductive material;
a communication circuit disposed in an inner space of the electronic device and configured to transmit and/or receive a wireless signal in a first frequency band through the at least one first conductive portion; and
at least one dielectric (410) disposed between the first housing and the second housing,
wherein, in a slide-out state, the electronic device comprises an overlapping area (400a) in which the first housing and the second housing at least partially overlap each other, and the at least one dielectric is disposed in the overlapping area.

2. The electronic device of claim 1, wherein, in the slide-out state, an operating band of a parasitic resonance frequency generated through coupling of the first housing and the second housing is determined by a contact surface area between the at least one dielectric and the first and second housings.

3. The electronic device of claim 1 or 2, wherein, in the slide-out state, an operating band of a parasitic resonance frequency generated through coupling of the first housing and the second housing is determined by a permittivity of the at least one dielectric.

4. The electronic device of any one of claims 1 to 3, wherein the at least one dielectric is disposed in a manner of being attached to any one housing of the first housing or the second housing at least in the overlapping area, and being in surface contact with a remaining housing.

5. The electronic device of claim 4, comprising:
a coating layer (C) for frictional force reduction formed on a surface of the at least one dielectric facing the remaining housing.

6. The electronic device of claim 5, wherein the coating layer for friction reduction comprises a Teflon coating layer or a hard coating layer.

7. The electronic device of claim 4, wherein the housing to which the at least one dielectric is attached comprises a recess (2231) formed lower than an outer surface, and the at least one dielectric is disposed in a manner of being at least partially accommodated in the recess.

8. The electronic device of any one of claims 1 to 7, wherein the at least one dielectric comprises a plurality of dielectrics (411, 412, 413) disposed to be spaced apart at designated intervals at least in the overlapping area.

9. The electronic device of claim 8, wherein at least some dielectrics among the plurality of dielectrics have different permittivities.

10. The electronic device of any one of claims 1 to 9, wherein the at least one dielectric comprises at least one of nylon, polyester, adhesive tape, or sponge.

11. The electronic device of any one of claims 1 to 3, wherein the at least one dielectric is disposed in a manner of being attached to any one housing of the first housing or the second housing at least in the overlapping area, and being close to a remaining housing.

12. The electronic device of any one of claims 1 to 11, wherein the first housing comprises a first lateral member (211) forming a portion of a side surface of the electronic device and a first extension member (212) extending from the first lateral member to a first space of the first housing, and the second housing comprises a second lateral member (221) forming a portion of the side surface of the electronic device and a second extension member (222) extending from the second lateral member to a second space of the second housing.

13. The electronic device of claim 12, wherein the at least one dielectric is disposed at least between the first extension member and the second extension member in the overlapping area.

14. The electronic device of claim 12 or 13, wherein the at least one dielectric (415, 416) is disposed at least between the first lateral member and the second lateral member in the overlapping area.

15. The electronic device of any one of claims 12 to 14, wherein the at least one dielectric (415, 416, 417) is disposed to extend seamlessly from between the first lateral member and the second lateral member to between the first extension member and the second extension member in the overlapping area.
